(19) Europäisches Patentamt
European Patent Office
Office européen des brevets

(11) Publication number: **0 301 487 B1**

(12) **EUROPEAN PATENT SPECIFICATION**

(45) Date of publication of patent specification: **09.09.92** (51) Int. Cl.⁵: **C04B 41/48**

(21) Application number: **88112061.2**

(22) Date of filing: **26.07.88**

# (54) Process for the protection of stone materials, marble, bricks and concrete from decay caused by atmospheric agents and pollutants or by mural writings with paints, inks and the like.

(30) Priority: **27.07.87 IT 2146887**
**11.12.87 IT 2295087**

(43) Date of publication of application:
**01.02.89 Bulletin 89/05**

(45) Publication of the grant of the patent:
**09.09.92 Bulletin 92/37**

(84) Designated Contracting States:
**AT BE CH DE ES FR GB GR LI NL**

(56) References cited:
**EP-A- 0 192 493**
**EP-A- 0 215 492**
**DE-A- 1 694 508**

(73) Proprietor: **AUSIMONT S.p.A.**
**Foro Buonaparte, 31**
**I-20121 Milano(IT)**

Proprietor: **CONSIGLIO NAZIONALE DELLE RICERCHE**
**Piazzale Aldo Moro, 7**
**I-00185 Roma(IT)**

(72) Inventor: **Piacenti, Franco**
**79, via Costa S. Giorgio**
**I-50125 Firenze(IT)**
Inventor: **Manganelli Del Fa', Carlo**
**6, via Col di Nava**
**I-58043 Castiglione d. Pescaia Grosseto(IT)**
Inventor: **Moggi, Giovanni**
**14, via Galilei**
**I-20124 Milan(IT)**
Inventor: **Pasetti, Adolfo**
**2, piazza Sesia**
**I-20127 Milan(IT)**
Inventor: **Scala, Andrea**
**74, via Castel Guinelli**
**I-50063 Figline Valdarno Firenze(IT)**

(74) Representative: **Barz, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**W-8000 München 40(DE)**

**EP 0 301 487 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is concerned with a process for the protection of stone materials, marble, bricks and concrete, and of structures made from such materials, from decay caused by atmospheric agents and pollutants or by mural writings with paints, inks and the like.

It is known that the decay of building materials, such as marble, stone, bricks, and concrete, and of structures built from such materials, is caused by chemical and physical phenomena, both of which take place in the presence of water.

A physical phenomenon which acts on all building materials is that due to the succession of frost and thaw, which causes water absorbed inside the pores of the same material to freeze and the corresponding ice to melt, with changes in specific volume, and stresses which cause fractures, or separation of individual particles which constitute the material.

Another chemical-physical phenomenon is the process of dissolution in water of limestone which is present in marble as an essential component, and in stone as a binder, consequently having no cohesion between the granules.

Even more important in the decay of materials and structures exposed to outdoor environment is the set of phenomena of chemical nature: these are essentially constituted by the attack on carbonate portions of the material or of the structure, by agents and polluting substances contained in atmospheric air (carbon dioxide, sulphur dioxide, nitrogen oxides, hydrogen chloride, hydrogen sulphide); such pollutants react with the material in the presence of water, their concentration being particularly high in rain.

It is well known that, in order to eliminate or at least reduce the above-mentioned drawbacks, the speed of penetration of the water from the external environment into the interior of the material to be protected must be considerably reduced.

In order to achieve this purpose, chemical compounds exerting a water-repellant action are applied usually to the outer surface to be protected.

US-A-4499146 discloses the use for such a purpose of neutral perfluoropolyethers, i.e. perfluoropolyethers not provided with functional groups. EP-A-192493 and 215492 disclose the use of perfluoropolyethers wherein either one chain end, or both chain ends, are constituted by functional groups, such as amide groups or ester groups. The same European patent applications also disclose the use of functionalized perfluoropolyethers in mixture with neutral perfluoropolyethers.

The use of these perfluoropolyethers, either functionalized or not, gives good results in the protection of marble and of stones with low and medium porosity. Not so good results are obtained with high-porosity materials, i.e., with materials having 20-40%, or more, of porosity.

An object of the present invention is to provide a process which supplies an excellent protection both to low- or medium-porosity materials, and to high-porosity materials.

Another object is to provide a process which provides a better protection, the amount of protecting agents relative to both functionalized and non-functionalized perfluoropolyethers, being the same.

These and other purposes are achieved by the process of the present invention for the protection of stone materials, marble, bricks and concrete, and of structures built with such materials, from the atmospheric agents and pollutants, by means of the application of protective agents on the surface of said materials and structures. This process is characterized in that the protective agents are constituted by a mixture of:

1) polytetrafluoroethylene, or a tetrafluoroethylene copolymer containing up to 12 mol % of other perfluorinated monomers, said homopolymer or copolymer being used in the form of a fine powder and in an amount of 2 to 30% by weight, relative to the total mixture;

2) a certain perfluoropolyether not bearing functional groups as specified below; and/or

3) a certain perfluoropolyether or fluoropolyether having one chain end, or both chain ends constituted by a functional group capable of forming a chemical and/or physical bond with the material to be protected, or a product of polycondensation or ethylenic polymerization of the above-said functionalized perfluoropolyether or fluoropolyether, said (per)fluoropolyethers being also specified below.

As tetrafluoroethylene copolymers suitable for use in the present invention, for example, those may be cited, which contain up to 10 mol % of hexafluoropropene and up to 5 mol % of perfluoroalkyl-perfluorovinyl-ethers, in particular perfluoropropyl-perfluorovinyl-ether, used up to an amount of 3 mol %.

The average molecular weight of tetrafluoroethylene homopolymers or copolymers is generally within the range of from 100 000 to 2 000 000.

The average size of the primary homopolymer or copolymer particles is generally comprised within the range of from 0.05 to 0.5 µm.

The average molecular weight of the perfluoropolyether not containing functional groups is commonly

comprised within the range of from 3 000 to 16 000 whereas that of the functionalized perfluoropolyethers or fluoropolyethers is commonly comprised within the range of from 500 to 20 000.

The above perfluoropolyethers not bearing functional groups and the above functionalized perfluoropolyethers contain oxaperfluoroalkylene units belonging to the following types:

(I) ($CF_2$-$CF_2O$) and ($CF_2O$), such units being randomly distributed throughout the perfluoropolyether chain;

(II)

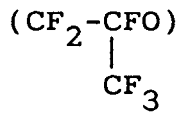

and (CFXO), wherein X is either F or $CF_3$, said units being randomly distributed along the chain;

(III) ($CF_2$-$CF_2O$),

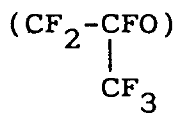

and (CFXO),

wherein X is either F or $CF_3$, such units being randomly distributed along the chain; or

(IV)

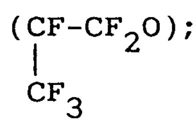

(V) ($CF_2$-$CF_2$-$CF_2O$);

(VI)

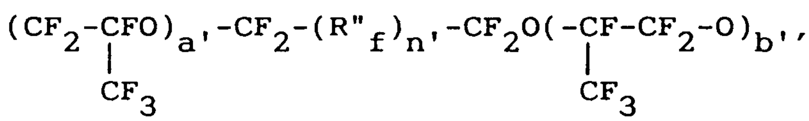

wherein $R''_f$ is a fluoroalkylene group, preferably containing 1 to 8 carbon atoms; n'is either 0 or 1; a' and b' are integers, and the (a' + b') sum is equal to or higher than 2;

(VII) ($CF_2$-$CF_2O$);

(VIII)

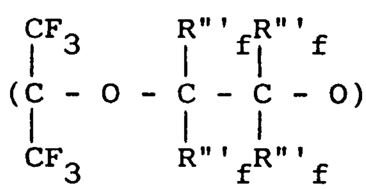

wherein the groups $R'''_f$, either equal to or different from each other, represent fluorine or a perfluoroalkyl group;

(IX) ($CF_2O$-$CF_2$-$CF_2O$).

The above functionalized fluoropolyethers have units selected from:

(X) $(CH_2\text{-}CF_2\text{-}CF_2O)$; and

(XI) $(CF_2\text{-}CF_2\text{-}CH_2O)_{p'}\text{-}R^{iv}{}_f\text{-}O\text{-}(CH_2\text{-}CF_2\text{-}CF_2O)_{q'}$

wherein $R^{iv}{}_f$ is a fluoroalkylene group preferably containing 1 to 8 carbon atoms and p' and q' are zero, or integers and the (p' + q') sum is equal to or larger than 2.

Examples of functional groups of functionalized perfluoropolyethers and fluoropolyethers are disclosed in detail as per follows.

Neutral perfluoropolyethers (i.e. perfluoropolyethers not bearing functional groups) and functionalized perfluoropolyethers and fluoropolyethers suitable to be used in the mixture of protective agents of the present invention, are e.g. disclosed in above-cited US-A-4499146, and EP-A-192493 and 215492. For a description of these and other suitable neutral perfluoropolyethers and functionalized perfluoropolyethers and fluoropolyethers, and of their manufacturing process, reference is also made to US patents Nos. 3242218, 3655041, 3715378, 3810874, 3847978 and 4523039; to IT-A-903446; to EP-A-148492, 151877 and 224201 and to WO 87/00538 and WO 87/02992.

Neutral perfluoropolyethers of the following classes may for example be used:

A)

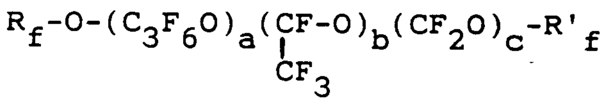

wherein:

$R_f$ and $R'_f$, either equal to or different from each other, are selected from $CF_3$, $C_2F_5$ and $C_3F_7$; the $C_3F_6O$ (oxytrifluoromethyl-trifluoroethylene),

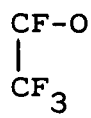

and $CF_2O$ units being randomly distributed along the chain;

a is an integer;

b and c are integers or zero;

when the (b + c) sum is different from zero, the a/(b + c) ratio is comprised within the range of from 5 to 40.

The average molecular weight is comprised within the range of from 4 000 to 10 000.

B) $CF_3O\text{-}(C_2F_4O)_d(CF_2O)_e\text{-}CF_3$

wherein the $C_2F_4O$ and $CF_2O$ units are randomly distributed along the chain;

d and e are integers;

the d/e ratio is comprised within the range of from 0.3 to 5.

The average molecular weight is comprised within the range of from 3,000 to 16,000.

C) $CF_3O\text{-}(C_3F_6O)_f(C_2F_4O)_g(CFXO)_h\text{-}CF_3$

wherein the $C_3F_6O$, $C_2F_4O$ and CFXO units are randomly distributed along the chain;

f, g and h are integers;

the f/(g + h) ratio is comprised within the range of from 1 to 50;

the g/h ratio is comprised within the range of from 1 to 10;

X is either F or $CF_3$;

the average molecular weight is comprised within the range of from 4 000 to 12 000.

D) $R^3{}_fO\text{-}(CF_2CF_2CF_2O)_jR^4{}_f$

wherein $R^3{}_f$ and $R^4{}_f$,either equal to,or different from each other, are $-CF_3$ or $-C_2F_5$ and

j is an integer having such a value, that the average molecular weight is comprised within the range of from 4 000 to 16 000.

As the functionalized perfluoropolyethers or fluoropolyethers, for example those belonging to the following classes are used:

E)

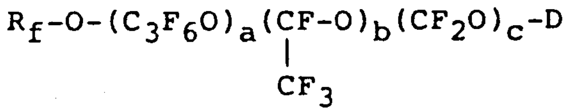

wherein:

$R_f$ is a perfluoroalkyl group containing from 1 to 3 carbon atoms; the $C_3F_6O$,

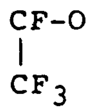

and $CF_2O$ units are randomly distributed along the chain;

a is an integer;

b and c are integers or zero;

when the (b+c) sum is different from zero, the a/(b+c) ratio is comprised within the range of from 5 to 40.

D is a -CFX-COZ' group, wherein X is F or $CF_3$ and Z' is OH, $OR^5$ or $NR^6R^7$, wherein $R^5$ is an alkyl group containing from 1 to 8 carbon atoms, an aromatic group or an alkylaromatic group, such as, e.g., the benzyl radical; the aromatic group preferably contains either 6 or 10 carbon atoms, and the alkylaromatic group contains from 7 to 11 carbon atoms; the aromatic group may be substituted with alkyl groups (preferably containing from 1 to 3 carbon atoms) or polyethoxy groups (preferably containing from 1 to 6 ethoxy units);

$R^6$ and $R^7$, either equal to or different from each other, can be an alkyl group containing from 1 to 8 carbon atoms or a phenyl group substituted with alkyl groups or polyethoxy groups. The alkyl groups preferably contain from 1 to 3 carbon atoms. The polyethoxy groups preferably contain from 1 to 6 ethoxy units.

The average molecular weight is comprised within the range of from 500 to 10 000.

F) $D'-(C_2F_4O)_d(CF_2O)_e-D'$

wherein the $C_2F_4O$ and $CF_2O$ units are randomly distributed along the chain;

d and e are integers; the ratio of d/e is comprised within the range of from 0.3 to 5;

$D' = CF_2-COZ'$, wherein $Z'$ has the above disclosed meaning;

the average molecular weight is comprised within the range of from 1 000 to 20 000.

G)

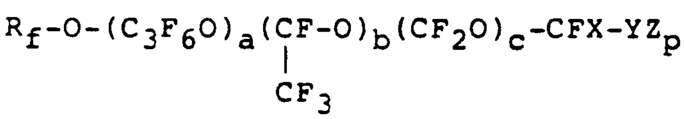

wherein:

$R_f$ is a perfluoroalkyl group containing from 1 to 3 carbon atoms; the $C_3F_6O$,

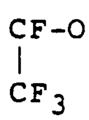

and $CF_2O$ units are randomly distributed along the chain;

a is an integer;

b and c are integers or zero;

when the (b+c) sum is different from zero, the a/(b+c) ratio is comprised within the range of from 5 to 40.

p can be 1 or 2;
Y is a bivalent or trivalent bridging organic radical.
The average molecular weight is comprised within the range of from 500 to 10 000.
Z is a functional group capable of forming a chemical and/or physical bond with the material to be protected, and is selected from
Z1: a non-aromatic, non-fluorinated organic radical not containing active hydrogen atoms, containing two or more heteroatoms, either equal to, or different from each other and selected from O, N, S, Se and P, which are donors of electronic doublets and are located in 1-3, 1-4 or 1-5 position relatively to one another, or an aromatic radical optionally containing heteroatoms, selected from those indicated above, capable of forming coordination or charge-transfer bonds. These radicals are described in EP-A-165649 and 165650.

An example of a suitable non-aromatic organic radical is:

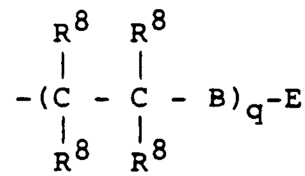

wherein $R^8$ is either H or an alkyl containing from 1 to 3 carbon atoms, E is an alkyl containing from I to 3 carbon atoms, B is either O or S, and q is 2 or 3.
An example of a suitable aromatic radical is:

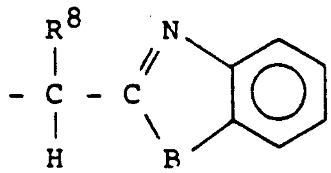

wherein $R^8$ and B have the above indicated meaning.
Another example of a suitable aromatic radical is:

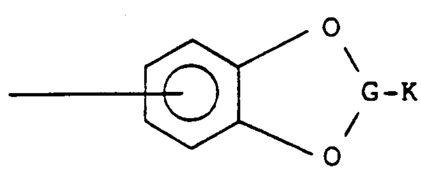

wherein G is >CH- or >CH-$CH_2$- and K is a hydrogen atom or an alkyl radical containing from 1 to 3 carbon atoms.
Other suitable radicals are described in the above-mentioned patent applications.
Z2: A -$CONR^9R^{10}$ or $COOR^{11}$ radical, wherein $R^{11}$ is an alkyl group containing from 1 to 8 carbon atoms, an aromatic group or an alkylaromatic group, such as, e.g., benzyl; the aromatic group preferably contains 6 or 10 carbon atoms and the alkylaromatic group preferably contains from 7 to 11 carbon atoms; the aromatic group may be substituted with alkyl groups (preferably containing from 1 to 3 carbon atoms)or polyethoxy groups (preferably containing from 1 to 6 ethoxy units).
$R^9$ and $R^{10}$, eiher equal to, or different from, each other, have the same meaning as $R^{11}$;
or a radical:

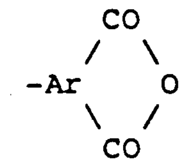

wherein Ar is an aromatic group preferably containing 6 or 10 carbon atoms;
or an -OH; -NCO;

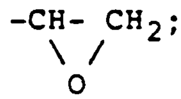

$-NHR^{11}$; $-COR^{11}$; $-SiR^{12}_t(OR^{13})_{3-t}$ radical,
wherein $R^{12}$ and $R^{13}$, either equal to, or different from, each other, have the same meaning as $R^{11}$ , and wherein t is zero, 1, or 2.
Z3: a radical containing a polymerizable unsaturation of ethylenic type;
Z4: a radical belonging to Z1 class, containing one or more $R^{11}$ substituents, wherein $R^{11}$ has the above indicated meaning.
H) $AO-(C_2F_4O)_k(CF_2O)_l-A'$
wherein the $C_2F_4O$ and $CF_2O$ units are randomly distributed throughout the chain;
k and l are integers; the k/l ratio is comprised within the range of from 0.3 to 5;
$A' = -CFX-YZ_p$
A is A′ or a perfluoroalkyl radical containing from 1 to 3 carbon atoms; p, X, Y and Z have the same meaning as above stated.
The average molecular weight is comprised within the range of from 1 000 to 20 000.
J) $AO-(C_3F_6O)_f(C_2F_4O)_g(CFXO)_h-A'$
wherein the $C_3F_6O$, $C_2F_4O$ and CFXO units are randomly distributed throughout the chain;
f, g and h are integers; the f/(g+h) ratio is comprised within the range of from 1 to 50;
the g/h ratio is comprised within the range of from 1 to 10;
A, A′ and X have the same meaning as above stated;
the average molecular weight is comprised within the range of from 500 to 20 000.
K)

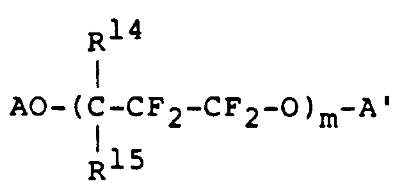

wherein $R^{14}$ and $R^{15}$, either equal to, or different from, each other, are selected from H, Cl and F; a fluorine atom in $-CF_2-$ moieties may be substituted by H, Cl, a perfluoroalkoxy group (preferably containing from 1 to 12 carbon atoms) or a perfluoroalkyl group (preferably containing from 1 to 4 carbon atoms).
When the compound contains

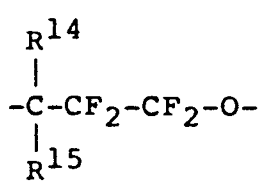

units which are different from each other these units are randomly distributed throughout the chain; m is an integer chosen so that the average molecular weight is comprised within the range of from 1 500 to 8 000.

The end groups belonging to Z3 class are selected, in particular, from methacryl, acryl, cinnamic, vinyl, allyl, vinylether and allylether radicals.

The organic bridging radical Y can be, for example:

$-CH_2O-$, $-CH_2-O-CH_2-$, $-CH_2(OCH_2CH_2)_n-$ (wherein n is an integer comprised within the range of from 1 to 3), $-CF_2-$, $-CF_2O-$, $-CH_2-$, $-CONR^{11}-$, -COO-, -COS-, -CO-, $-CH_2NR^{11}-$, $-CH_2S-$, wherein $R^{11}$ has the above specified meaning.

Other suitable bridging radicals Y are disclosed, as X or Y radicals, in U S-A-4094911.

The bi-functionalized (per)fluoropolyethers belonging to (F), (H), (J) and (K) classes can also be used, as explained in EP-A-215492 in the form of their products of polycondensation with other polycondensible monomers, i.e., e.g., as polyurethanes polyureas, polyesters, polyamides, polyethers, polyimides and polyamic acids.

The monofunctional or bifunctional (per)fluoropolyethers belonging to (G), (H), (J) and (K) classes, containing Z3 end groups, i.e., those containing a polymerizable unsaturation of ethylenic type, can be also used in the form of their polymerization products, as disclosed in EP-A-215492.

The polytetrafluoroethylene, or its copolymer to be used in the present invention, can be obtained by means of known methods. It can be directly synthetized with the desired molecular weight, as described, e.g., by Mc Cane in "Encyclopaedia of Polymer Science and Technology", vol. 13, page 623, Interscience, New York, 1970.

As an alternative, by starting from an emulsion polymer or copolymer, having too high an average molecular weight, such molecular weight can be reduced by means of gamma radiation, as described, e.g., in Journal of Applied Polymer Science, Vol. 26, page 1373, 1981.

As mentioned above, the amount of polytetrafluoroethylene or of its copolymer in the mixture of protective agents according to the present invention is comprised within the range of from 2 to 30% by weight relative to the mixture, the mixture preferably containing from 10 to 20% thereof.

In the two-component mixture, in addition to polytetrafluoroethylene or its copolymer, a neutral perfluoropolyether or a functionalized perfluoropolyether or fluoropolyether is used. In the three-component mixtures, both said polyether types are present; in said three-component mixtures, the weight ratio of the functionalized perfluoropolyether or fluoropolyether to the neutral perfluoropolyether is equal to, or higher than, 0.01; said ratio is preferably comprised within the range of from 0.1 to 0.6.

The either neutral or functionalized polyether, or their mixture, can be used as such, or dissolved in a chlorofluorocarbon or in a fluorocarbon. Particularly suitable is 1,1,2-trichloro-1,2,2-trifluoro-ethane. In this latter case, the solution usually contains from 30 to 90% by weight of polyether.

Since polytetrafluoroethylene or its copolymer, are neither soluble in either functionalized or non-functionalized perfluoropolyethers or fluoropolyethers, nor in said solvents, they are introduced into the mixture in the solid state. More precisely, by suitably stirring, a suspension is prepared of the polymer or copolymer in the liquid phase constituted by the polyether(s) and the possible solvent, and the suspension is applied to the materials or structures to be protected.

The application of the suspension of protective agents on the materials or structures is carried out by suitable means: for example, it can be carried out by spraying an atomized - with or without compressed air - liquid stream, or by spreading by brush.

The amount of protective mixture to be applied to the surfaces to be protected may vary within wide limits, as a function of the nature of the material to be treated, in particular, of its porosity. Obviously, for porous materials, larger amounts are used. Usually, amounts comprised within the range of from 10 g to 500 $g/m^2$ of surface to be treated are used.

Except for those cases in which products are used, which derive from the polycondensation or ethylenic polymerization of functionalized perfluoropolyethers or fluoropolyethers, the protective composition can be removed from the materials and structures to which it has been applied, by treating such materials and structures first with 1,1,2-trichloro-1,2,2-trifluoroethane in order to remove most of the composition, and then with compressed air, in order to remove the residues of polytetrafluoroethylene or of its copolymer.

The present invention also relates to a process for preventing or eliminating the effects of decay caused on materials for the building industry and for linings, by the use of inks, spray paints or brush paints, coloured chalks, posted-up placards and the like.

The Applicant has found that by using either a perfluoropolyether, or a fluoropolyether having at least one end group consisting of a functional group capable of forming a chemical and/or physical bond with the material to be protected, in mixture with:

(1) polytetrafluoroethylene, or a tetrafluoroethylene copolymer containing up to 12 mol % of other perfluorinated monomers, with said homopolymer or copolymer being used in the form of a fine powder, present in an amount comprised within the range of from 2 to 30% by weight; and, optionally,

(2) a perfluoropolyether containing perfluoroalkyl end-groups;

surfaces of materials having a porosity even higher than 10%, and preferably lower than 30% can be protected over a very long period of time.

As tetrafluoroethylene copolymers suitable for use, there can be used, e.g. those indicated above.

The average molecular weight of the homopolymer or copolymer of tetrafluoroethylene, the average size of the primary particles of homopolymer or copolymer, the average molecular weight of the perfluoropolyether not bearing functional groups, and the average molecular weight of the functionalized perfluoropolyether or fluoropolyether are as indicated above.

The perfluoropolyethers not bearing functional groups and the functionalzed perfluoropolyethers may contain oxaperfluoroalkylene units belonging to types (I) to (IX) as described above.

The functionalized fluoropolyethers may contain the units (X) and (XI) as described above.

Specific examples of functionalized perfluoropolyethers and specific examples of the neutral perfluoropolyethers, i.e. perfluoropolyethers containing perfluoroalkyl end groups, are those belonging to the classes described above.

The polytetrafluoroethylene, or the tetrafluoroethylene copolymer to be used in the present invention can be obtained by the methods indicated above.

The amount of polytetrafluoroethylene, or of tetrafluoroethylene copolymers in mixture with protecting agents according to the present invention is comprised within the range of from 2 to 30% by weight relative to the total mixture.

Preferably, the mixture comprises from 10 to 20% thereof.

The functionalized polyether, either alone, or optionally in admixture with polyethers bearing functional groups, can be used as such, or it can be dissolved in a chlorofluorocarbon or fluorocarbon as indicated above.

In said mixtures the weight ratio of the functionalized perfluoropolyether or functionalized fluoropolyethers to neutral perfluoropolyethers is equal to or larger than 0.01; such a ratio is preferably comprised within the range of from 0.1 to 0.6.

Since polytetrafluoroethylene and tetrafluoroethylene copolymers are neither soluble in perfluoropolyethers or fluoropolyethers whether functionalized or not, nor in the above said solvents, they are incorporated into the mixture in the solid state as indicated above.

Application of the protective agents suspension to materials or buildings is carried out by using the means indicated above.

The amount of protecting agent to be applied to the surfaces to be protected is as indicated above.

Except for those cases in which products of polycondensation or ethylenic polymerization of functionalized perfluoropolyethers or fluoropolyethers are used, the protecting composition can be removed from the materials and buildings to which it was applied as indicated above.

The following examples are to further illustrate the present invention.

EXAMPLE 1

Nine marble test pieces having a porosity of 1.7% are used. The test pieces have a size of 50 x 50 x 20 mm.

Test piece 1 is not treated. Different protective compositions are applied by means of a brush to the other test pieces.

To test pieces 2-5, variable amounts of neutral perfluoropolyether Fomblin® YR and of polytetrafluoroethylene are applied. (To test piece 5 no polytetrafluoroethylene is applied).

The neutral perfluoropolyether Fomblin®YR manufactured by Montefluos S.p.A. has the formula:

$$R_f-O-(C_3F_6O)_a(\underset{\displaystyle CF_3}{\underset{|}{CF}}-O)_b(CF_2O)_c-R'_f$$

wherein: $R_f$ is $CF_3$ and $R'_f$ is $CF_3$.

Its average molecular weight is of approximately 6 500.

To test pieces 6-9, variable amounts of a mixture of a neutral perfluoropolyether Fomblin® YR and of an amide functionalized perfluoropolyether are applied together with variable amounts of polytetrafluoroethylene (to test piece 9, no polytetrafluoroethylene is applied).

The ratio by weight of neutral perfluoropolyether to the amidic perfluoropolyether is of 60:40.

The amidic perfluoropolyether has the formula:

$$R_f\text{-}O\text{-}(C_3F_6O)_a(\underset{\displaystyle CF_3}{\underset{|}{C}}FO)_b(CF_2O)_c\text{-}CF_2\text{-}CONH\text{-}iso\text{-}C_4H_9$$

wherein: $R_f$ is $CF_3$. Its average molecular weight is of approximately 5,000.

Polytetrafluoroethylene is Algoflon® L206 , manufactured by Montefluos S.p.A.. The size of the primary particles of polytetrafluoroethylene is comprised within the range of from 0.15 to 0.25 $\mu$m.

The amount of protective composition applied by brush-spreading to test pieces 2-9 is expressed as grams per square metre of surface area, and is reported in Table 1A.

The efficacy of the treatment is evaluated on the basis of the amount of water absorbed by the various test pieces within 60 minutes and is expressed by the percent ratio:

$$\frac{\text{(water absorbed by untreated test piece) less (water absorbed after treatment)}}{\text{(water absorbed by untreated test piece)}}$$

The test is carried out by applying to a face of the test pieces a device constituted by a glass cylinder filled with water, and connected with a graduated micropipette, which allows the amount of water absorbed by the surface of contact with the sample to be measured. Such equipment is described in the document published by Unesco-Rilem PEM Group with No. 78,182. The reading of the absorbed water is carried out at prefixed time intervals, and the quantity read is expressed as g/cm$^2$ of surface area.

The amount of water absorbed by the various test pieces (expressed as g/cm$^2$ and the corresponding efficacy of the treatment are reported in Table 1A.

It can be observed that the use of the compositions according to the present invention yields better results, than the use of either the neutral or functionalized perfluoropolyether alone, although a smaller amount of protective agents is used.

On some test pieces, also the permability to water vapour was determined. The permeability of the protective coatings to water vapour is a necessary feature, in that it enables any water which may be present under the coating to evaporate.

The measurement of water vapour permeability is carried out as follows: the test piece is fastened, by means of a sealing agent, to a plexiglas vessel, according to the arrangement as disclosed in EP-A-192493.

Inside the vessel, 2.5 ml of water are previously introduced; the whole assembly is weighed and is then introduced inside a calcium-chloride desiccator.

At pre-established time intervals, the assembly constituted by the test piece and the vessel is weighed. The tests are run at the controlled constant temperature of 20 °C. The test is discontinued after 144 hours, and the end weight losses are compared to those of the untreated sample, to which a permeability of 100% is attributed.

The test results are reported in Table B.

It can be observed that the protective compositions according to the present invention supply a permeability to water vapour slightly lower than that obtained with perfluoropolyether alone. Anyway, such a permeability remains very good, in that the permeability values are regarded as good from 50% up.

TABLE 1A

| Test No. | Treated Material | Protective Agents (% by weight) | Amount of Applied Protective Agents g/m$^2$ | Absorbed Water Amount g/cm$^2$x10$^{-4}$ | Treatment Efficacy % |
|---|---|---|---|---|---|
| 1* | Marble | None | - | from 47.40 to 74.72 according to test | - |
| 2 | " | Fomblin YR 95% + PTFE 5% | 45 | 3.80 | 92 |
| 3 | " | Fomblin YR 90% + PTFE 10% | 56 | 2.92 | 95 |
| 4 | " | Fomblin YR 85% + PTFE 15% | 55 | 2.96 | 95 |

TABLE 1A (continued)

| Test No. | Treated Material | Protective Agents (% by weight) | Amount of Applied Protective Agents g/m² | Absorbed Water Amount g/cm²x10⁻⁴ | Treatment Efficacy % |
|---|---|---|---|---|---|
| 5* | Marble | Fomblin® YR 100% | 81 | 21.20 | 71 |
| 6 | " | Amidic mixture 95% + PTFE 5% | 35 | 2.00 | 96 |
| 7 | " | Amidic mixture 90% + PTFE 10% | 33 | 2.56 | 95 |
| 8 | " | Amidic mixture 85% + PTFE 15% | 37 | 2.36 | 96 |
| 9* | " | Amidic mixture 100% | 59 | 16.96 | 84 |

* = comparative

TABLE 1B

| Test No. | Treated Material | Protective Agents (% by weight) | Amount of Applied Protective Agents $g/m^2$ | Permeability to water |
|---|---|---|---|---|
| 1 | Marble | None | - | 100% |
| 5* | Marble | Fomblin® YR 100% | 81 | 85% |
| 2 | " | Fomblin® YR 95% + PTFE 5% | 45 | 80% |
| 3 | " | Fomblin® YR 90% + PTFE 10% | 56 | 80% |
| 4 | " | Fomblin® YR 85% + PTFE 15% | 55 | 70% |

* = comparative

Example 2

The tests are carried out on a sandstone having a porosity of 8.5%. The modalities are the same as of Example 1, except for the fact that the test of water absorption is carried out in 30 minutes, and the permeability to water vapour is not determined.

The experimental data and the results are reported in Table 2.

Example 3

The tests of Example 2 are carried out on a Vicenza stone having a porosity of 30%.

The experimental data and the results are reported in Table 3.

It is observed that the mixtures of protective agents according to the present invention give a high treatment efficacy also in case of very porous materials.

TABLE 2

| Test No. | Treated Material | Protective Agents (% by weight) | Amount of Applied Protective Agents g/m² | Absorbed Water Amount g/cm²x10⁻⁴ | Treatment Efficacy % |
|---|---|---|---|---|---|
| 11* | Sand-stone | None | - | from 211.48 to 250.64 according to test | - |
| 12 | " | Fomblin® YR 95% + PTFE 5% | 101 | 21.44 | 90 |
| 13 | " | Fomblin® YR 90% + PTFE 10% | 127 | 22.44 | 91 |
| 14 | " | Fomblin® YR 85% + PTFE 15% | 119 | 8.36 | 96 |
| 15* | " | Fomblin® YR 100% | 188 | 49.24 | 77 |

TABLE 2 (continued)

| Test No. | Treated Material | Protective Agents (% by weight) | Amount of Applied Protective Agents $g/m^2$ | Absorbed Water Amount $g/cm^2 x10^{-4}$ | Treatment Efficacy % |
|---|---|---|---|---|---|
| 16 | Sand-stone | Amidic mixture 95% + PTFE 5% | 74 | 8.20 | 96 |
| 17 | " | Amidic mixture 90% + PTFE 10% | 80 | 8.80 | 96 |
| 18 | " | Amidic mixture 85% + PTFE 15% | 79 | 5.40 | 98 |
| 19* | " | Amidic mixture 100% | 115 | 33.36 | 84 |

* = comparative

TABLE 3

| Test No. | Treated Material | Protective Agents (% by weight) | Amount of Applied Protective Agents $g/m^2$ | Absorbed Water Amount $g/cm^2 x10^{-4}$ | Treatment Efficacy % |
|---|---|---|---|---|---|
| 21* | Vicenza Stone | None | - | from 2,015.48 to 2,212.48 according to test | - |

TABLE 3 (Continued)

| Test No. | Treated Material | Protective Agents (% by weight) | Amount of Applied Protective Agents g/m² | Absorbed Water Amount g/cm²x10⁻⁴ | Treatment Efficacy % |
|---|---|---|---|---|---|
| 22 | Vicenza Stone | Fomblin® YR 95% + PTFE 5% | 365 | 116.52 | 95 |
| 23 | " | Fomblin® YR 90% + PTFE 10% | 308 | 54.92 | 97 |
| 24 | " | Fomblin® YR 85% + PTFE 15% | 209 | 35.88 | 98 |
| 25* | " | Fomblin® YR 100% | 2,120 | 769.60 | 62 |
| 26 | " | Amidic mixture 95% + PTFE 5% | 173 | 57.36 | 97 |
| 27 | " | Amidic mixture 90% + PTFE 10% | 177 | 36.76 | 98 |
| 28 | " | Amidic mixture 85% + PTFE 15% | 181 | 34.04 | 98 |

TABLE 3 (Continued)

| Test No. | Treated Material | Protective Agents (% by weight) | Amount of Applied Protective Agents g/m² | Absorbed Water Amount g/cm²x10⁻⁴ | Treatment Efficacy % |
|---|---|---|---|---|---|
| 29* | Vicenza Stone | Amidic mixture 100% | 2,354 | 608.00 | 69 |

* = comparative

Example 4

The tests of Example 2 are repeated on a Lecce stone having a porosity of 42%.

The experimental data and the results are reported in Table 4.

Example 5

The tests were carried out on a concrete having 18% of porosity. The material was prepared by starting from: Portland 425 cement, using a water/cement ratio of 0.425 and a cement/inerts (sand and gravel) ratio of 0.3.

The protective agent is constituted by a mixture of a neutral perfluoropolyether, a carboxy-functionalized perfluoropolyether and polytetrafluoroethylene.

The neutral pefluoropolyether is the same Fomblin® YR as of Example 1.

The functionalized perfluoropolyether has the formula:

$$R_f\text{-O-}(C_3F_6O)_a(\underset{\displaystyle CF_3}{\underset{|}{C}}FO)_b(CF_2\text{-O})_c\text{-}CF_2\text{-COOH}$$

wherein $R_f$ is $-CF_3$, and has an average molecular weight of approximately 2 000.

The ratio of the functionalized perfluoropolyether relatively to the neutral perfluoropolyether is of 20:80 parts by weight.

Mixtures are used, which contain various amounts of Algoflon L206 polytetrafluoroethylene.

The procedure of Example 2 is followed.

The experimental data and the results obtained are reported in Table 5.

TABLE 4

| Test No. | Treated Material | Protective Agents (% by weight) | Amount of Applied Protective Agents g/m$^2$ | Absorbed Water Amount g/cm$^2$x10$^{-4}$ | Treatment Efficacy % |
|---|---|---|---|---|---|
| 31* | Lecce Stone | None | - | from 2 146.80 to 2 514 20 according to test | - |
| 32 | " | Fomblin® YR 95% + PTFE 5% | 199 | 233.72 | 91 |
| 33 | " | Fomblin® YR 90% + PTFE 10% | 185 | 60.80 | 98 |

TABLE 4 (Continued)

| Test No. | Treated Material | Protective Agents (% by weight) | Amount of Applied Protective Agents g/m$^2$ | Absorbed Water Amount g/cm$^2$x10$^{-4}$ | Treatment Efficacy % |
|---|---|---|---|---|---|
| 34 | Lecce Stone | Fomblin® YR 85% + PTFE 15% | 194 | 23.36 | 99 |
| 35* | " | Fomblin® YR 100% | 2,316 | 989.00 | 55 |
| 36 | " | Amidic mixture 95% + PTFE 5% | 174 | 54.04 | 98 |
| 37 | " | Amidic mixture 90% + PTFE 10% | 162 | 8.16 | 100 |
| 38 | " | Amidic mixture 85% + PTFE 15% | 152 | 2.52 | 100 |
| 39* | " | Amidic mixture 100% | 1,861 | 428.20 | 81 |

* = comparative

TABLE 5

| Test No. | Treated Material | Protective Agents (% by weight) | Amount of Applied Protective Agents $g/m^2$ | Absorbed Water Amount $g/cm^2x10^{-4}$ | Treatment Efficacy % |
|---|---|---|---|---|---|
| 41* | Concrete | None | - | from 3,860.80 to 5,130.40 according to test | - |
| 42 | " | Carboxylic mixture 95% + PTFE 5% | 150 | 1,261.00 | 70 |
| 43 | " | Carboxylic mixture 90% + PTFE 10% | 150 | 650.04 | 85 |
| 44 | " | Carboxylic mixture 85% + PTFE 15% | 150 | 442.08 | 90 |
| 45* | " | Carboxylic mixture 100% | 150 | 2,130.40 | 50 |

* = comparative

Example 6

A slab of Carrara marble was used, whose surface had a porosity of 0.3%. Such a slab had a thickness of 4 cm, with sides of 120x180 cm, and was subdivided into two portions with the same surface area; to one of said portions, an amount of FOMBLIN® Y MET (a perfluoropolyether with perfluoroalkyl end groups by Montefluos S.p.A.) of 80 $g/m^2$ was applied.

The application was carried out by means of a brush, after a cleaning of the surface, in order to remove any dust or foreign substances, by means of two successive operations, spaced out by approximately 70 hours.

Five days after the last application, the slab surface treated with the protecting agent was slightly darker and more glossy than the original surface was before the treatment.

Now, the following operations were carried out:

a) "writing" tests, carried out by starting from the untreated surface portion, and proceeding towards the protected surface, by using:

1. Spraying of a quick-drying red nitrocellulose lacquer (a commercial can);
2. Spraying of a normal red lacquer (a commercial can);
3. Brush-painting with a red nitrocellulose lacquer;
4. White chalk of blackboard type.

On the untreated surface, in all cases the performed writing action resulted evident, whilst on the protected surface portion, the following was respectively observed:

1. A uniform, poorly perceivable trace, constituted by lacquer droplets, trending to coagulate;
2. As above, with the presence of coagulums and immediate formation of large paint drops flowing downwards;
3. The brush "slips", leaving an imperceptible trail of colour;
4. Chalk "slips" without leaving any colour.

b) Cleaning test. Approximately 30 hours after the test disclosed under (a), tests on the "written" surface were carried out. The test was carried out with dry cotton cloths, soaked with acetone and replaced by other clean cloths, as they became saturated with paint and solvent.

In the case of the protected surface, the retained paint was fully and quickly removed, and the normal appearance of marble was restored. In case of the untreated surface, the cleaning, besides being more toilsome, did not allow satisfactory results to be reached, owing to the persisting of evident colour areas, caused by the marble absorbing the paint-solvent solution.

The same cleaning results are also obtained when trichloroethylene is used as the solvent.

(Comparative) Example 7

The test is carried out in the same way as disclosed in Example 1, but the cleaning step (the (b) step)

is carried out 90 days later. The cleaning of the parts treated with the protective agent does not yield satisfactory results, due to the persistence of colour areas.

Example 8

A set of plates of Carrara marble with porosity of 1.5% were used, with each one of them being subdivided into two portions of equal surface area; to each of said portions, variable amounts of perfluoroalkyl-terminated perfluoropolyethers of Fomblin® Y type, of perfluoropolyethers with isobutyl ester (IBE) end groups, and of perfluoropolyethers with isobutyl-amide end groups (IBA) were applied.

The IBE-terminated perfluoropolyethers correspond to the general formula (E) wherein $R_f$ = $CF_3$ and D = $CF_2COOC_4H_9$ (ISO), whilst the IBA-terminated perfluoropolyethers correspond to the general formula (E) wherein $R_f$ = $CF_3$ and D = $CF_2COONH(C_4H_9)$ (ISO).

The application was carried out as reported in Example 6.

Ninety days after the treatment, the following operations were carried out on the dry surfaces:

a) "writing" tests, carried out by starting from the untreated surface portion, and proceeding towards the protected surface portion, by using:

1. Spraying of a quick-drying red nitrocellulose lacquer (a commercial can);
2. Spraying of a normal red lacquer (a commercial can);
3. Brush-painting with a red nitrocellulose lacquer;
4. White chalk of blackboard type.

On the untreated surface, in all cases the performed writing action resulted evident, whilst on the protected surface portion, the following was respectively observed:

1. A uniform, poorly perceivable trace, constituted by lacquer microdroplets, tending to coagulate;
2. As above, with the presence of coagulums and immediate formation of large paint drops flowing downwards;
3. The brush "slips", leaving an imperceptible trail of colour;
4. Chalk "slips" without leaving any colour.

b) Cleaning test. Approximately 72 hours later than the test disclosed under (a), tests on the "written" surface were carried out. The test was carried out with dry cotton cloths, soaked with acetone, and replaced by other clean cloths, as they became saturated with paint and solvent.

In case of protected surface, the retained paint was fully and quickly removed, and the normal appearance of marble was restored. In case of untreated surface, the cleaning, besides being more toilsome, does not allow satisfactory results to be reached, due to the persistence of evident colour areas, caused by the the marble absorbing the paint-solvent solution.

The following is a synoptic table of the results:

| Plate No. | 1 | 2 | 3 | 4 |
|---|---|---|---|---|
| Product and $g/m^2$ | Untreated | Y MET 80 $g/m^2$ | IBE 50 $g/m^2$ | IBA 50 $g/m^2$ |
| Results after Cleaning | Evident traces | Slight halo | Complete disappear-ance | Complete disappear-ance |

Example 9

A set of small plates of Vicenza Stone (an organogen limestone) was used, which had a porosity of 30%, subdivided into two portions having the same surface area, to each of which variable amounts were applied of perfluoroalkyl-terminated perfluoro-polyethers of FOMBLIN(R) Y MET type, and of IBE-terminated

and IBA-terminated perfluoropolyethers as defined in Example 8, as well as of a mixture containing 85% by weight of isobutylamino-terminated perfluoropolyethers and 15% of fine PTFE powder, and finally of perfluoropolyethers (AI) having the general formula of hereinabove reported (E) type, wherein $R_f = CF_3$ and $D = CF_2COOH$. Ninety days after the treatment, the following operations were carried out on the dry surface:

(a) writing tests; and

(b) cleaning tests,

according to the same modalities as set out in the previous Examples.

In particular, the cleaning tests were carried out 72 hours after the writing test.

The results obtained were the following:

| Plate No. | 1 | 2 | 3 | 4 | 5 | 6 |
|---|---|---|---|---|---|---|
| Product and $g/m^2$ | Untreated | Y MET 600 $g/m^2$ | IBE 300 $g/m^2$ | IBA 400 $g/m^2$ | IBA+PTFE 200 $g/m^2$ | A1 150 $g/m^2$ |
| Results after Cleaning | Paint persistence | Toned down image | Light halo | Light halo | Complete disappearance | Complete disappearance |

## Claims

1. A process for the protection of stone materials, marble, bricks and concrete, and of structures obtained from such materials, against the decay caused by atmospheric agents and pollutants, by means of application of a protective agent to the surface of said materials and structures, characterized in that the

protective agent comprises a mixture of:

(1) polytetrafluoroethylene, or a tetrafluoroethylene copolymer containing up to 12 mol % of other perfluorinated monomers, with said homopolymer or copolymer being used as a fine powder and in an amount of 2 to 30% by weight, relative to the total mixture;

(2) a perfluoropolyether not bearing functional groups, said perfluoropolyether containing repeating units selected from:

(I) ($CF_2$-$CF_2O$) and ($CF_2O$), with such units being randomly distributed along the perfluoropolyether chain;

(II)

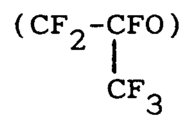

and (CFXO),
wherein X is either F or $CF_3$, with said units being randomly distributed along the chain;

(III) ($CF_2$-$CF_2O$),

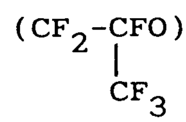

and (CFXO),
wherein X is either F or $CF_3$, with such units being randomly distributed along the chain;

(IV)

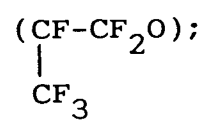

(V) ($CF_2$-$CF_2$-$CF_2O$);

(VI)

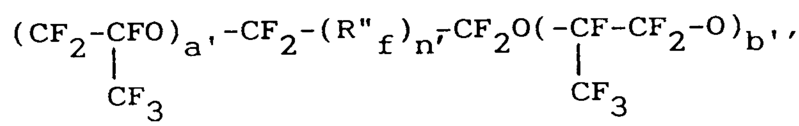

wherein $R''_f$ is a fluoroalkylene group; n'is either 0 or 1; a' and b' are integers, and the (a' + b') sum is equal to or higher than 2;

(VII) ($CF_2$-$CF_2O$);

(VIII)

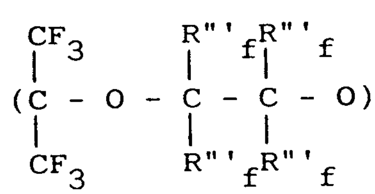

wherein the $R'''_f$ groups, either equal to or different from each other, represent a fluorine atom or a perfluoroalkyl group; and

(IX) $(CF_2\text{-}CF_2\text{-}CF_2O)$; and/or

(3) a perfluoropolyether or a fluoropolyether having a chain end, or both chain ends, constituted by a functional group capable of forming a chemical and/or physical bond with the material to be protected, or a product of polycondensation or ethylenic polymerization of the above-said functionalized perfluoropolyether or fluoropolyether, said fluoropolyether having units selected from:

(X) $(CH_2\text{-}CF_2\text{-}CF_2O)$; and

(XI) $(CF_2\text{-}CF_2\text{-}CH_2O)_{p'}\text{-}R^{iv}_f\text{-}O\text{-}(CH_2\text{-}CF_2\text{-}CF_2O)_{q'}$

wherein $R^{iv}_f$ is a fluoroalkylene group and p' and q' are zero, or integers, and the (p' + q') sum is equal to or greater than 2;

and said perfluoropolyether having repeating units (I) to (IX) as defined above.

**2.** The process according to claim 1, characterized in that the average size of the primary particles of tetrafluoroethylene homopolymer or copolymer is comprised within the range of from 0.05 to 0.5 $\mu$m.

**3.** The process according to claim 1 or 2, characterized in that the average molecular weight of tetrafluoroethylene homopolymer or copolymer is comprised within the range of from 100 000 to 2 000 000.

**4.** The process according to one or more of the preceding claims, characterized in that the average molecular weight of the perfluoropolyether not bearing functional groups is comprised within the range of from 3 000 to 16 000.

**5.** The process according to one or more of the preceding claims, characterized in that the perfluoropolyether or fluoropolyether having a chain end, or both chain ends, constituted by a functional group, has an average molecular weight comprised within the range of from 500 to 20 000.

**6.** The process according to one or more of the preceding claims, characterized in that the perfluoropolyether not bearing functional groups is selected from one of the following classes:

A)

$$R_f\text{-O-}(C_3F_6O)_a(\underset{\substack{|\\CF_3}}{CF}\text{-O})_b(CF_2O)_c\text{-}R'_f$$

wherein: $R_f$ and $R'_f$, either equal to or different from each other, are selected from $CF_3$, $C_2F_5$ and $C_3F_7$; the $C_3F_6O$ (oxytrifluoromethyltrifluoroethylene),

$$\underset{\substack{|\\CF_3}}{CF}\text{-O}$$

and $CF_2O$ units are randomly distributed along the chain;

a is an integer;

b and c are integers or zero;

when the (b + c) sum is different from zero, the ratio a/(b + c) is comprised within the range of from 5 to 40;

the average molecular weight is comprised within the range of from 4 000 to 10 000;

B) $CF_3O\text{-}(C_2F_4O)_d(CF_2O)_e\text{-}CF_3$

wherein the $C_2F_4O$ and $CF_2O$ units are randomly distributed along the chain;

d and e are integers;

the d/e ratio is comprised within the range of from 0.3 to 5;

the average molecular weight is comprised within the range of from 3 000 to 16 000;

C) $CF_3O-(C_3F_6O)_f(C_2F_4O)_g(CFXO)_h-CF_3$
wherein the $C_3F_6O$, $C_2F_4O$ and CFXO units are randomly distributed along the chain;
f, g and h are integers;
the f/(g + h) ratio is comprised within the range of from 1 to 50;
the g/h ratio is comprised within the range of from 1 to 10,
X is F or $CF_3$;
the average molecular weight is comprised within the range of from 4 000 to 12 000;
D) $R^3{}_fO-(CF_2-CF_2-CF_2O)_jR^4{}_f$
wherein $R^3{}_f$ and $R^4{}_f$, either equal to, or different from each other, are $-CF_3$ or $-C_2F_5$ and j is an integer having such a value, that the average molecular weight is comprised within the range of from 4 000 to 16 000.

7. The process according to one or more of the preceding claims, characterized in that the perfluoropolyether or fluoropolyether having one chain end, or both chain ends,constituted by a functional group capable of forming a chemical and/or physical bond with the material to be protected is selected from one of the following classes:
E)

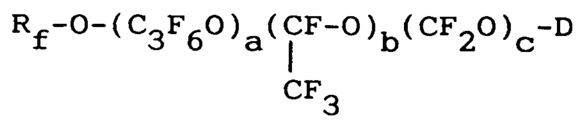

wherein:
$R_f$ is perfluoroalkyl group containing from 1 to 3 carbon atoms; the $C_3F_6O$,

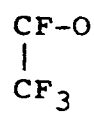

and $CF_2O$ units are randomly distributed along the chain;
a is an integer;
b and c are integers or zero;
when the (b + c) sum is different from zero, the a/(b + c) ratio is comprised within the range of from 5 to 40;
D is a -CFX-COZ' group, wherein X = F or $CF_3$ and Z' = OH, $OR^5$ or $NR^6R^7$, wherein $R^5$ is an alkyl group containing from 1 to 8 carbon atoms, an aromatic group or an alkylaromatic group, wherein the aromatic group may be substituted with alkyl groups or polyethoxy groups; $R^6$ and $R^7$, either equal or different from each other, can be an alkyl group containing from 1 to 8 carbon atoms or a phenyl group substituted with alkyl groups or polyethoxy groups;
the average molecular weight is comprised within the range of from 500 to 10,000;
F) $D'-(C_2F_4O)_d(CF_2O)_e-D'$
wherein the $C_2F_4O$ and $CF_2O$ units are randomly distributed along the chain;
d and e are integers; the d/e ratio is comprised within the range of from 0.3 to 5;
D' = $CF_2-COZ'$, wherein Z' has the above disclosed meaning;
the average molecular weight is comprised within the range of from 1 000 to 20 000;
G)

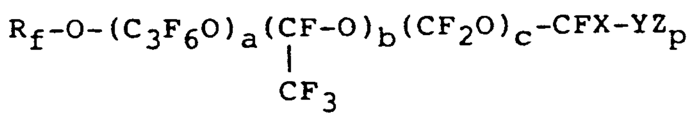

wherein:

$R_f$ is a perfluoroalkyl group containing from 1 to 3 carbon atoms; the $C_3F_6O$,

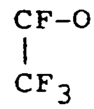

and $CF_2O$ units are randomly distributed along the chain;
a is an integer;
b and c are integers or zero;
when the (b + c) sum is different from zero, the a/(b + c) ratio is comprised within the range of from 5 to 40.
p can be 1 or 2;
Y is an either bivalent or trivalent bridging organic radical; the average molecular weight is comprised within the range of from 500 to 10 000.
Z is a functional radical capable of forming a chemical and/or physical bond with the material to be protected, and is selected from the group consisting of Z1, Z2, Z3, Z4, wherein:
Z1 is a non-aromatic, non-fluorinated organic radical not containing active hydrogen atoms, containing two or more heteroatoms, either equal to, or different from each other and selected from 0, N, S, Se and P, which are donors of electronic doublets and are situated in 1-3, 1-4 or 1-5 position relative to each other, or an aromatic radical optionally containing heteroatoms, selected from those indicated above, capable of forming coordination or charge-transfer bonds;
Z2 is a $-CONR^9R^{10}$ or $COOR^{11}$ radical, wherein $R^{11}$ is an alkyl group containing from 1 to 8 carbon atoms, an aromatic group or an alkylaromatic group, wherein the aromatic group may be substituted with alkyl groups or polyethoxy groups;
$R^9$ and $R^{10}$, either equal to, or different from, each other, have the same meaning as $R^{11}$;
or a radical:

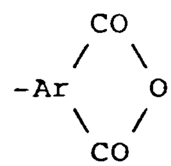

wherein Ar is an aromatic group; or an -OH: -NCO;

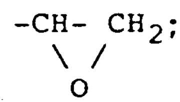

$-NHR^{11}$; $-COR^{11}$; $-SiR^{12}_t(OR^{13})_{3-t}$ radical, wherein $R^{12}$ and $R^{13}$, either equal to, or different from, each other, have the same meaning as $R^{11}$, and wherein t is zero, 1, or 2;
Z3 is a radical containing a polymerizable unsaturation of ethylenic type;
Z4 is a radical belonging to Z1 class, containing one or more $R^{11}$ substituents, wherein $R^{11}$ has the same meaning as above indicated ;
H) $AO-(C_2F_4O)_k(CF_2O)_l-A'$
wherein the $C_2F_4O$ and $CF_2O$ units are randomly distributed along the chain;
k and l are integers; the k/l ratio is comprised within the range of from 0.3 to 5;
$A' = -CFX-YZ_p$
A is A' or a perfluoroalkyl radical containing from 1 to 3 carbon atoms; p, X, Y and Z have the same meaning as above stated;
the average molecular weight is comprised within the range of from 1,000 to 20,000;
J) $AO-(C_3F_6O)_f(C_2F_4O)_g(CFXO)_h-A'$
wherein the $C_3F_6O$, $C_2F_4O$ and CFXO units are randomly distributed along the chain;
f, g and h are integers; the f/(g + h) ratio is comprised within the range of from 1 to 50;

the g/h ratio is comprised within the range of from 1 to 10;
A, A' and X have the same meaning as above stated, the average molecular weight is comprised within the range of from 500 to 20,000;
K)

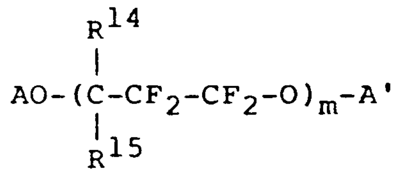

wherein $R^{14}$ and $R^{15}$, either equal to, or different from, each other, are selected from H, Cl and F; a fluorine atom in $-CF_2-$ moieties may be substituted by H, Cl, a perfluoroalkoxy group or a perfluoroalkyl group; when the compound contains

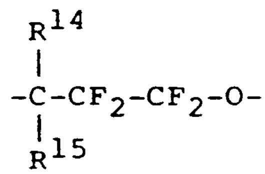

units which are different from one another, these units are randomly distributed along the chain, m is an integer chosen so that the average molecular weight is comprised within the range of from 1,500 to 8,000.

**8.** The process according to one or more of the preceding claims, characterized in that the Z3 radical is selected from methacryl, acryl, cinnamic, vinyl, allyl, vinylether and allylether radicals.

**9.** The process according to one or more of the preceding claims, characterized in that the organic bridging radical Y is selected from:
$-CH_2O-$, $-CH_2-O-CH_2-$, $-CH_2(OCH_2CH_2)_n-$ (wherein n is an integer comprised within the range of from 1 to 3), $-CF_2-$, $-CF_2O-$, $-CH_2-$, $-CONR^{11}-$, -COO-, -COS-, -CO-, $-CH_2NR^{11}-$, $-CH_2S-$, wherein $R^{11}$ is an alkyl group containing from 1 to 8 carbon atoms, an aromatic group or an alkylaromatic group, wherein the aromatic group may be substituted with alkyl groups or polyethoxy groups.

**10.** The process according to one or more of the preceding claims, characterized in that the mixture of protective agents contains from 10 to 20% by wegiht of tetrafluoroethylene homopolymer or copolymer.

**11.** The process according to one or more of the preceding claims, characterized in that the perfluoropolyether not bearing functional groups and/or the perfluoropolyether or the fluoropolyether having a chain end, or both chain ends, constituted by a functional group, are used in the form of a solution thereof in a chlorofluorocarbon or in a fluorocarbon.

**12.** The process according to claim 11, characterized in that the chlorofluorocarbon is 1,1,2-trichloro-1,2,2-trifluoroethane.

**13.** The process according to one or more of the preceding claims, characterized in that the amount of protective agents applied to the materials or structures to be protected is comprised within the range of from 10 to 500 $g/m^2$ of surface area to be treated.

**14.** A process for protecting materials for building industry and linings, from paints, inks and the like, which comprises applying to the surface of such materials having porosity values not higher than 40%, a coating comprising a perfluoropolyether or a fluoropolyether having one chain end or both chain ends constituted by a functional group capable of forming a chemical and/or physical bond with the material to be protected; wherein such perfluoropolyether contains oxaperfluoroalkylene units selected from the

following classes:

(I) $(CF_2\text{-}CF_2O)$ and $(CF_2O)$, with such units being randomly distributed along the perfluoropolyether chain;

(II)

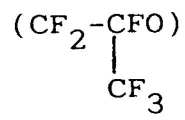

and (CFXO),

wherein X is either F or $CF_3$, with said units being randomly distributed along the perfluoropolyether chain;

(III) $(CF_2\text{-}CF_2O)$,

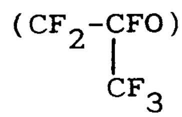

and (CFXO),

wherein X is either F or $CF_3$, with such units being randomly distributed along the perfluoropolyether chain;

(IV)

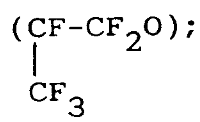

(V) $(CF_2\text{-}CF_2\text{-}CF_2O)$;

(VI)

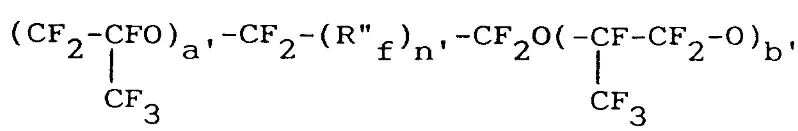

wherein $R''_f$ is a fluoroalkylene group;

n' is either 0 or 1;

a' and b' are integers, and the (a' + b') sum is equal to or higher than 2;

(VII) $(CF_2\text{-}CF_2O)$;

(VIII)

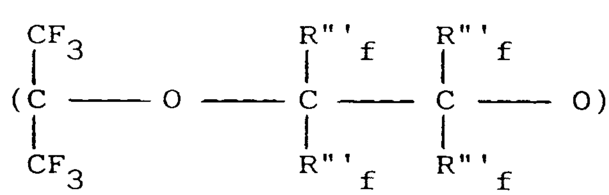

wherein the $R'''_f$ groups, either equal to or different from each other, represent a fluorine atom or a perfluoroalkyl group; and

(IX) $(CF_2O\text{-}CF_2\text{-}CF_2O)$;

and wherein the fluoropolyether contains the following units:

(X) ($CH_2$-$CF_2$-$CF_2O$); or

(XI) ($CF_2$-$CF_2$-$CH_2O$)$_{p'}$-$R^{iv}_f$-O-($CH_2$-$CF_2$-$CF_2O$)$_{q'}$,

wherein:

$R^{iv}_f$ is a fluoroalkylene group and

p' and q' are zero, or integers, and the (p' + q') sum is equal to or larger than 2;

such perfluoropolyether or fluoropolyether being used in mixture with

(1) 2 to 30% by weight, referred to the sum of the components of the coating, of polytetrafluoroethylene or tetrafluoroethylene copolymer containing up to 12 mol % of other perfluorinated monomers, with said homopolymer or copolymer being used in a fine powder form; and, optionally,

(2) a perfluoropolyether having perfluoroalkyl end groups.

**15.** The process according to claim 14, wherein polytetrafluoroethylene or a tetrafluoroethylene copolymer is present in an amount of from 10 to 20% by weight.

**16.** The process according to claim 14 or 15 wherein the tetrafluoroethylene copolymer contains up to 10 mol % of hexafluoropropene, and up to 5 mol % of perfluoroalkylperfluorovinyl ether.

## Patentansprüche

**1.** Verfahren zum Schutz von Steinmaterialien, Marmor, Ziegeln und Beton und den aus diesen Materialien erstellten Bauten gegen Zerfall, hervorgerufen durch atmosphärische Stoffe oder Schadstoffe, durch Aufbringen eines Schutzmittels auf die Oberfläche der Materialien und Bauten, dadurch gekennzeichnet, daß das Schutzmittel eine Mischung umfaßt von:

(1) Polytetrafluorethylen oder einem Tetrafluorethylen-Copolymer, das bis zu 12 Mol-% andere perfluorierte Monomere enthält, wobei das Homopolymer oder Copolymer als feines Pulver und in einer Menge von 2 bis 30 Gew.-%, bezogen auf die Gesamtmischung, verwendet wird;

(2) einem Perfluorpolyether, der keine funktionellen Gruppen trägt, wobei der Perfluorpolyether Struktureinheiten enthält, die ausgewählt sind aus:

(I) ($CF_2$-$CF_2O$) und ($CF_2O$), wobei diese Einheiten statistisch über die Perfluorpolyetherkette verteilt sind;

(II)

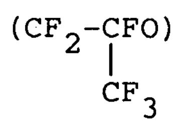

und (CFXO)

wobei X entweder F oder $CF_3$ ist und die Einheiten statistisch über die Kette verteilt sind;

(III) ($CF_2$-$CF_2O$),

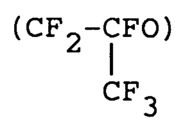

und (CFXO),

wobei X entweder F oder $CF_3$ ist und die Einheiten statistisch über die Kette verteilt sind;

(IV)

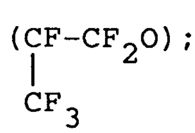

(V) $CF_2$-$CF_2$-$CF_2O$);
(VI)

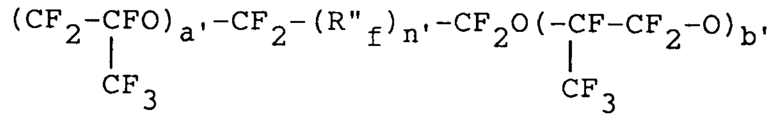

wobei R"$_f$ eine Fluoralkylengruppe ist; n' entweder 0 oder 1 ist; a' und b' ganze Zahlen sind und die Summe aus (a' + b') gleich oder größer ist als 2;
(VII) ($CF_2$-$CF_2O$);
(VIII)

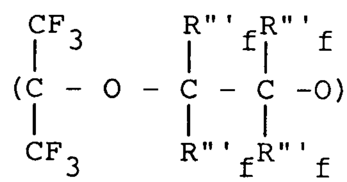

wobei die Gruppen R"'$_f$ entweder gleich oder verschieden voneinander ein Fluoratom oder eine Perfluoralkylgruppe darstellen; und
(IX) ($CF_2$-$CF_2$-$CF_2O$); und/oder

(3) einem Perfluorpolyether oder einem Fluorpolyether, bei dem ein oder beide Kettenenden aus einer funktionellen Gruppe gebildet sind, die imstande ist, mit dem zu schützenden Material eine chemische und/oder physikalische Verbindung einzugehen, oder einem Produkt der Polykondensation oder der ethylenischen Polymerisation des oben genannten funktionalisierten Perfluorpolyethers oder Fluorpolyethers, wobei der Fluorpolyether Einheiten aufweist, die ausgewählt sind aus:
(X) ($CH_2$-$CF_2$-$CF_2O$); und
(XI) $(CF_2\text{-}CF_2\text{-}CH_2O)_{p'}\text{-}R^{iv}_f\text{-}O\text{-}(CH_2CF_2\text{-}CF_2O)_{q'}$
wobei $R^{iv}_f$ eine Fluoralkylengruppe ist und p' und q' Null oder ganze Zahlen sind und die Summe aus (p' + q') gleich oder größer ist als 2; und der Perfluorpolyether Struktureinheiten (I) bis (IX), wie oben definiert, aufweist.

**2.** Verfahren nach Anspruch 1, dadurch gekennzeichnet, daß die durchschnittliche Größe der Primärpartikel des Tetrafluorethylen-Homopolymers oder -Copolymers im Bereich von 0,05 bis 0,5 $\mu$m liegt.

**3.** Verfahren nach Anspruch 1 oder 2, dadurch gekennzeichnet, daß das durchschnittliche Molekulargewicht des Tetrafluorethylen-Homopolymers oder -Copolymers im Bereich von 100000 und 2000000 liegt.

**4.** Verfahren nach einem oder mehreren der vorhergehenden Ansprüche, dadurch gekennzeichnet, daß das durchschnittliche Molekulargewicht des Perfluorpolyethers, der keine funktionellen Gruppen trägt, im Bereich von 3000 bis 16000 liegt.

**5.** Verfahren nach einem oder mehreren der vorhergehenden Ansprüche, dadurch gekennzeichnet, daß der Perfluorpolyether oder der Fluorpolyether, bei dem ein oder beide Kettenenden aus einer funktionellen Gruppe gebildet sind, ein durchschnittliches Molekulargewicht im Bereich von 500 bis 20000 aufweisen.

**6.** Verfahren nach einem oder mehreren der vorhergehenden Ansprüche, dadurch gekennzeichnet, daß der Fluorpolyether, der keine funktionellen Gruppen trägt, aus einer der folgenden Klassen ausgewählt ist:
A)

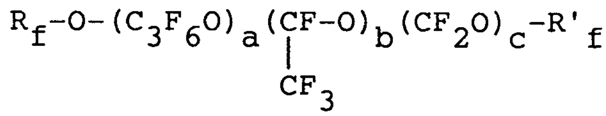

wobei : $R_f$ und $R'_f$ entweder gleich oder verschieden voneinander aus $CF_3$, $C_2F_5$ und $C_3F_7$ ausgewählt sind; die $C_3F_6O$ (Oxytrifluormethyltrifluorethylen),

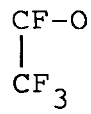

und $CF_2O$ Einheiten statistisch über die Kette verteilt sind;
a eine ganze Zahl ist;
b und c ganze Zahlen oder Null sind;
der Quotient a/(b + c) im Bereich von 5 bis 40 liegt, wenn die Summe aus (b + c) ungleich Null ist;
das Molekulargewicht im Bereich von 4000 bis 10000 liegt;

B) $CF_3O\text{-}(C_2F_4O)_d(CF_2O)_e\text{-}CF_3$
wobei die $C_2F_4O$ und $CF_2O$ Einheiten statistisch über die Kette verteilt sind;
d und e ganze Zahlen sind;
der Quotient d/e im Bereich von 0,3 bis 5 liegt;
das durchschnittliche Molekulargewicht im Bereich von 3000 und 16000 liegt;

C) $CF_3O\text{-}(C_3F_6O)_f(C_2F_4O)_g(CFXO)_h\text{-}CF_3$
wobei die $C_3F_6O$, $C_2F_4O$ und CFXO Einheiten statistisch über die Kette verteilt sind;
f, g und h ganze Zahlen sind;
der Quotient f/(g + h) im Bereich von 1 bis 50 liegt;
der Quotient g/h im Bereich von 1 bis 10 liegt;
X F oder $CF_3$ ist;
das durchschnittliche Molekulargewicht im Bereich von 4000 bis 12000 liegt;

D) $R^3_fO\text{-}(CF_2\text{-}CF_2\text{-}CF_2O)_jR^4_f$
wobei $R^3_f$ und $R^4_f$ entweder gleich oder verschieden voneinander $-CF_3$ oder $-C_2F_5$ sind und j eine ganze Zahl von solcher Größe ist, daß das durchschnittliche Molekulargewicht im Bereich von 4000 bis 16000 liegt.

**7.** Verfahren nach einem oder mehreren der vorhergehenden Ansprüche, dadurch gekennzeichnet, daß der Perfluorpolyether oder Fluorpolyether, bei dem ein oder beide Kettenenden aus einer funktionellen Gruppe gebildet sind, die imstande ist, mit dem zu schützenden Material eine chemische und/oder physikalische Verbindung einzugehen, aus den folgenden Klassen ausgewählt ist:
E)

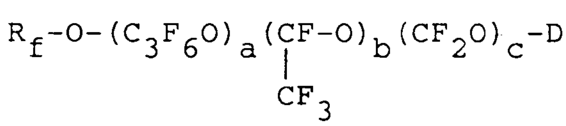

wobei:
$R_f$ eine Perfluoralkylgruppe ist, die 1 bis 3 Kohlenstoffatome enthält; die $C_3F_6O$,

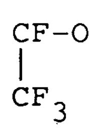

und $CF_2O$ Einheiten statistisch über die Kette verteilt sind;
a eine ganze Zahl ist;

b und c ganze Zahlen oder Null sind;
der Quotient a/(b + c) im Bereich von 5 bis 40 liegt, wenn die Summe aus (b + c) ungleich Null ist;
D eine Gruppe -CFX-COZ' ist, worin X = F oder $CF_3$ und Z' = OH, $OR^5$ oder $NR^6R^7$, worin $R^5$ eine Alkylgruppe, die 1 bis 8 Kohlenstoffatome enthält, eine aromatische Gruppe oder eine alkylaromatische Gruppe ist, wobei die aromatische Gruppe durch Alkylgruppen oder Polyethoxygruppen substituiert werden kann; $R^6$ und $R^7$ entweder gleich oder verschieden voneinander eine Alkylgruppe sein können, die 1 bis 8 Kohlenstoffatome enthält, oder eine durch Alkylgruppen oder Polyethoxygruppen substituierte Phenylgruppe;
das durchschnittliche Molekulargewicht im Bereich von 500 bis 10000 liegt;
F) $D'-(C_2F_4O)_d(CF_2O)_e-D'$
wobei die $C_2F_4O$ und $CF_2O$ Einheiten statistisch über die Kette verteilt sind;
d und e ganze Zahlen sind; der Quotient d/e im Bereich von 0,3 bis 5 liegt;
D' = $CF_2$-COZ', wobei Z' die oben genannte Bedeutung hat;
das durchschnittliche Molekulargewicht im Bereich von 1000 bis 20000 liegt;
G)

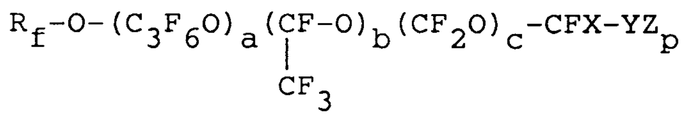

wobei:
$R_f$ eine Perfluoralkylgruppe ist, die 1 bis 3 Kohlenstoffatome enthält;
die $C_3F_6O$,

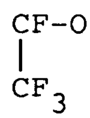

und $CF_2O$ Einheiten statistisch über die Kette verteilt sind;
a eine ganze Zahl ist;
b und c ganze Zahlen oder Null sind;
der Quotient a/(b + c) im Bereich von 5 bis 40 liegt, wenn die Summe aus (b + c) ungleich Null ist,
p 1 oder 2 sein kann;
Y ein entweder zweiwertiger oder dreiwertiger überbrückender organischer Rest ist;
das durchschnittliche Molekulargewicht im Bereich von 500 bis 10000 liegt.
Z ein funktioneller Rest ist, der imstande ist, mit dem zu schützenden Material eine chemische und/oder physikalische Verbindung einzugehen und aus der Gruppe ausgewählt wird, die aus Z1, Z2, Z3 und Z4 besteht, dabei ist:
Z1 ein nicht-aromatischer, nicht-fluorierter organischer Rest, der keine aktiven Wasserstoffatome enthält, 2 oder mehr Heteroatome enthält, welche entweder gleich oder verschieden voneinander aus O, N, S, Se und P ausgewählt sind, die Elektronenpaar-Donatoren sind und die relativ zueinander in Position 1-3, 1-4 oder 1-5 stehen, oder ein aromatischer Rest, der wahlweise Heteroatome enthält, die aus den oben genannten ausgewählt sind und die imstande sind, Koordinationsverbindungen oder Charge-Transfer-Bindungen auszubilden;
Z2 ein Rest $-CONR^9R^{10}$ oder $COOR^{11}$ ist, wobei $R^{11}$ eine Alkylgruppe ist, die 1 bis 8 Kohlenstoffatome enthält, eine aromatische Gruppe oder eine alkylaromatische Gruppe, wobei die aromatische Gruppe durch Alkylgruppen oder Polyethoxygruppen substituiert werden kann;
$R^9$ und $R^{10}$, entweder gleich oder verschieden voneinander, dieselbe Bedeutung wie $R^{11}$ haben;
oder ein Rest:

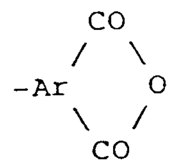

wobei Ar eine aromatische Gruppe ist; oder eine -OH, -NCO,

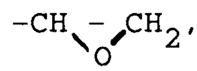

$-NHR^{11}$, $-COR^{11}$, $-SiR^{12}_t(OR^{13})_{3-t}$ Gruppe ist, wobei $R^{12}$ und $R^{13}$, entweder gleich oder verschieden voneinander dieselbe Bedeutung wie $R^{11}$ habenund wobei t Null, 1 oder 2 ist;
Z3 ein Rest ist, der eine polymerisierbare ungesättigte Bindung vom Ethylentyp enthält;
Z4 ein Rest ist, der zur Klasse Z1 gehört und der einen oder mehrere Substituenten $R^{11}$ enthält, wobei $R^{11}$ die vorstehende Bedeutung hat;
H) $AO-(C_2F_4O)_k(CF_2O)_l-A'$
wobei die $C_2F_4O$ und $CF_2O$ Einheiten statistisch über die Kette verteilt sind;
k und l ganze Zahlen sind; der Quotient k/l im Bereich von 0,3 bis 5 liegt;
$A' = -CFX-YZ_p$
A entweder A'oder ein Perfluoralkylrest ist, der 1 bis 3 Kohlenstoffatome enthält; p, X, Y und Z die vorstehende Bedeutung haben;
das durchschnittliche Molekulargewicht im Bereich von 1000 bis 20000 liegt;
J) $AO-(C_3F_6O)_f(C_2F_4O)_g(CFXO)_h-A'$
wobei die $C_3F_6O$, $C_2F_4O$ und CFXO Einheiten statistisch über die Kette verteilt sind;
f, g und h ganze Zahlen sind; der Quotient $f/(g+h)$ im Bereich von 1 bis 50 liegt;
der Quotient g/h im Bereich von 1 bis 10 liegt;
A, A' und X die vorstehende Bedeutung haben, das durchschnittliche Molekulargewicht im Bereich von 500 bis 20000 liegt;
K)

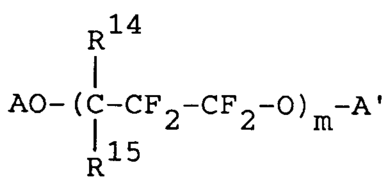

wobei $R^{14}$ und $R^{15}$, entweder gleich oder verschieden voneinander, aus H, Cl und F ausgewählt sind; ein Fluoratom in den $-CF_2$-Gruppen durch H, Cl, eine Perfluoralkoxygruppe oder eine Perfluoralkylgruppe substituiert sein kann; wenn die Verbindung

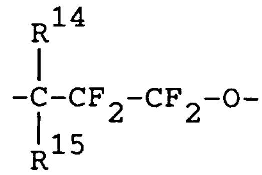

Einheiten enthält, die voneinander verschieden sind, diese Einheiten statistisch über die Kette verteilt sind, m eine ganze Zahl ist, die so gewählt ist, daß das durchschnittliche Molekulargewicht im Bereich von 1500 und 8000 liegt.

**8.** Verfahren nach einem oder mehreren der vorhergehenden Ansprüche, dadurch gekennzeichnet, daß der Rest Z3 ausgewählt ist unter Methacryl-, Acryl-, Zimt-, Vinyl-, Allyl-, Vinylether- und Allyletherresten.

**9.** Verfahren nach einem oder mehreren der vorhergenannten Ansprüche, dadurch gekennzeichnet, daß der organische überbrückende Rest y ausgewählt ist aus:
$-CH_2O-$, $-CH_2-O-CH_2-$, $CH_2(OCH_2CH_2)_n-$ ( wobei n eine ganze Zahl im Bereich von 1 bis 3 ist), $-CF_2-$, $-CF_2O-$, $-CH_2-$, $CONR^{11}-$, -COO-, -COS-, -CO-, $-CH_2NR^{11}-$ $-CH_2S-$, wobei $R^{11}$ eine Alkylgruppe ist, die 1 bis 8 Kohlenstoffatome enthält, eine aromatische Gruppe oder eine alkylaromatische Gruppe, wobei die aromatische Gruppe durch Alkylgruppen oder Polyethoxygruppen substituiert sein kann.

**10.** Verfahren nach einem oder mehreren der vorhergehenden Ansprüche, dadurch gekennzeichnet, daß die Mischung der Schutzmittel 10 bis 20 Gew.-% Tetrafluorethylen-Homopolymer oder -Copolymer enthält.

**11.** Verfahren nach einem oder mehreren der vorhergehenden Ansprüche, dadurch gekennzeichnet, daß der Perfluorpolyether, der keine funktionellen Gruppen enthält, und/oder der Perfluorpolyether oder der Fluorpolyether, bei dem ein oder beide Kettenenden durch eine funktionelle Gruppe gebildet werden, in Form einer Lösung in einem Chlorfluorkohlenstoff oder einem Fluorkohlenstoff zur Anwendung kommen.

**12.** Verfahren nach Anspruch 11, dadurch gekennzeichnet, daß der Chlorfluorkohlenstoff 1,1,2-Trichlor-1,2,2-trifluorethan ist.

**13.** Verfahren nach einem oder mehreren der vorhergehenden Ansprüche, dadurch gekennzeichnet, daß die Menge des Schutzmittels, das auf die zu schützenden Materialien oder Bauten aufgetragen wird, im Bereich von 10 bis 500 $g/m^2$ der zu behandelnden Oberfläche liegt.

**14.** Verfahren zum Schutz von Materialien für das Baugewerbe und Verkleidungen gegen Anstriche, Farben und dergleichen, bei dem man auf die Oberfläche derartiger Materialien, die Porositätswerte von nicht mehr als 40% aufweisen, eine Beschichtung aufbringt, die einen Perfluorpolyether oder einen Fluorpolyether enthält, deren eines oder beide Kettenenden durch eine funktionelle Gruppe gebildet sind, die imstande ist, mit dem zu schützenden Material eine chemische und/oder physikalische Verbindung einzugehen; wobei der Perfluorpolyether Oxaperfluoralkyleneinheiten enthält, die aus den folgenden Klassen ausgewählt sind:

(I) $(CF_2-CF_2O)$ und $(CF_2O)$, wobei diese Einheiten statistisch über die Perfluorpolyetherkette verteilt sind;

(II)

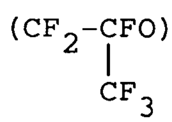

und (CFXO),
wobei X entweder F oder $CF_3$ ist und die Einheiten statistisch über die Perfluorpolyetherkette verteilt sind,

(III) $(CF_2-CF_2O)$,

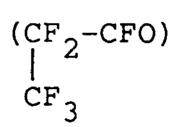

und (CFXO),
wobei X entweder F oder $CF_3$ ist und die Einheiten statistisch über die Perfluorpolyetherkette verteilt sind;

(IV)

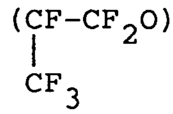

(V) $(CF_2\text{-}CF_2\text{-}CF_2O)$;

(VI)

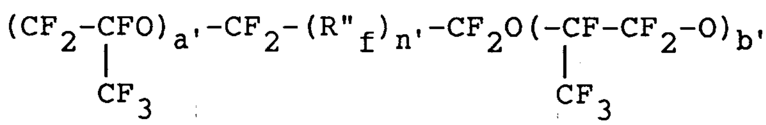

wobei R"$_f$ eine Fluoralkylengruppe ist;

n'entweder 0 oder 1 ist;

a'und b'ganze Zahlen sind und die Summe aus (a' + b) gleich oder größer ist als 2;

(VII) $(CF_2\text{-}CF_2O)$;

(VIII)

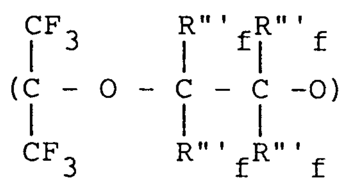

wobei die Gruppen R"'$_{f'}$ entweder gleich oder verschieden voneinander, ein Fluoratom oder eine Perfluoralkylgruppe darstellen; und

(IX) $(CF_2O\text{-}CF_2\text{-}CF_2O)$;

und wobei der Fluorpolyether die folgenden Einheiten enthält:

(X) $(CH_2\text{-}CF_2\text{-}CF_2O)$; oder

(XI) $(CF_2\text{-}CF_2\text{-}CH_2O)_{p'}\text{-}R^{iv}{}_f\text{-}O\text{-}(CH_2\text{-}CF_2\text{-}CF_2O)_{q'}$

wobei:

$R^{iv}{}_f$ eine Fluoralkylengruppe ist und p'und q' Null oder ganze Zahlen sind, und die Summe aus (p' + q') gleich oder größer ist als 2,

wobei diese Perfluorpolyether oder Fluorpolyether in Mischung mit

(1) 2 bis 30 Gew.-%, bezogen auf die Summe der Komponenten der Beschichtung, polytetrafluorethylen oder Tetrafluorethylen-Copolymer, welches bis zu 12 Mol-% andere perfluorierte Monomere enthält, wobei das Homopolymer oder Copolymer in Form eines feinen Pulvers zur Anwendung kommt; und wahlweise

(2) einem Perfluorpolyether mit Perfluoralkyl-Endgruppen verwendet werden.

**15.** Verfahren nach Anspruch 14, worin das Polytetrafluorethylen oder Tetrafluorethylen-Copolymer in einer Menge von 10 bis 20 Gew.-% vorhanden ist.

**16.** Verfahren nach Anspruch 14 oder 15, worin das Tetrafluorethylen-Copolymer bis Zu 10 Mol-% Hexafluorpropen und bis Zu 5 Mol-% Perfluoralkylperfluorvinylether enthält.

## Revendications

**1.** Un procédé de protection de matériaux pierreux, de marbre, de briques et de béton, ainsi que d'ouvrages obtenus à partir de ces matériaux, contre une dégradation provoquée par les agents atmosphériques et les polluants, par application d'un agent protecteur sur la surface desdits matériaux et ouvrages, caractérisé en ce que l'agent protecteur comprend un mélange:

(1) de polytétrafluoréthylène, ou d'un copolymère de tétrafluoréthylène contenant jusqu'à 12% en moles d'autres monomères perfluorés, ledit homopolymère ou copolymère étant utilisé sous forme d'une poudre fine et en une quantité de 2 à 30% en poids par rapport au mélange total;

(2) d'un perfluoropolyéther ne portant pas de groupes fonctionnels, ledit perfluoropolyéther contenant des motifs répétitifs choisis parmi:

(I) $(CF_2\text{-}CF_2O)$ et $(CF_2O)$, ces motifs étant répartis statistiquement sur la chaîne perfluoropolyéther;

(II)

$$(CF_2\text{-}\underset{CF_3}{\underset{|}{C}}FO)$$

et (CFXO), où X est F ou $CF_3$,

lesdits motifs étant répartis statistiquement sur la chaîne;

(III) $(CF_2\text{-}CF_2)$,

$$(CF_2\text{-}\underset{CF_3}{\underset{|}{C}}FO)$$

et (CFXO), où X est F ou $CF_3$,

ces motifs étant répartis statistiquement sur la chaîne; ou

(IV)

$$(\underset{CF_3}{\underset{|}{C}}F\text{-}CF_2O);$$

(V) $(CF_2\text{-}CF_2\text{-}CF_2O)$;

(VI)

$$(CF_2\text{-}\underset{CF_3}{\underset{|}{C}}FO)_{a'}\text{-}CF_2\text{-}(R''_f)_{n'}\text{-}CF_2O(\text{-}\underset{CF_3}{\underset{|}{C}}F\text{-}CF_2\text{-}O)_{b'},$$

où $R''_f$ est un groupe fluoralkylène; n' vaut 0 ou 1;

a' et b' sont des entiers, et la somme (a' + b') est supérieure ou égale à 2;

(VII) $(CF_2\text{-}CF_2O)$;

(VIII)

$$(\underset{CF_3}{\underset{|}{\overset{CF_3}{\overset{|}{C}}}} - O - \underset{R'''_f}{\underset{|}{\overset{R'''_f}{\overset{|}{C}}}} \text{———} \underset{R'''_f}{\underset{|}{\overset{R'''_f}{\overset{|}{C}}}} \text{——} O)$$

où les groupes $R'''_f$, qui sont identiques ou différents, représentent chacun un fluor ou un groupe perfluoralkyle;

(IX) $(CF_2O\text{-}CF_2\text{-}CF_2O)$;

(3) d'un perfluoropolyéther ou un fluoropolyéther, dont l'une des extrémités de chaîne, ou les deux extrémités de chaîne, sont constituées d'un groupe fonctionnel à même de former une liaison chimique et/ou physique avec le matériau à protéger, ou encore d'un produit de polycondensation ou de polymérisation éthylénique du perfluoropolyéther ou du fluoropolyéther fonctionnalisés ci-dessus, ledit fluoropolyéther comportant des motifs choisis parmi:

(X) $(CF_2\text{-}CF_2\text{-}CF_2O)$; et

(XI) $(CF_2\text{-}CF_2\text{-}CH_2O)_{p'}\text{-}R^{iv}_f\text{-}O\text{-}(CH_2\text{-}CF_2\text{-}CF_2O)_{q'}$

où $R^{iv}_f$ est un groupe fluoralkylène, et p' et q' valent chacun zéro ou sont des entiers, la somme

(p' + q') étant supérieure ou égale à 2.
et ledit perfluoropolyéther ayant des motifs répétitifs (I) à (IX) tels que définis ci-dessus.

**2.** Le procédé selon la revendication 1, caractérisé en ce que la granulométrie moyenne des particules primaires de l'homopolymère ou du copolymère de tétrafluoréthylène est comprise entre 0,05 et 0,5 $\mu$m.

**3.** Le procédé selon la revendication 1 ou 2, caractérisé en ce que la masse moléculaire moyenne de l'homopolymère ou du copolymère de tétrafluoréthylène est comprise entre 100 000 et 2 000 000.

**4.** Le procédé selon l'une ou plusieurs des revendications précédentes, caractérisé en ce que la masse moléculaire moyenne du perfluoropolyéther ne portant pas de groupes fonctionnels est comprise entre 3000 et 16 000.

**5.** Le procédé selon l'une ou plusieurs des revendications précédentes, caractérisé en ce que le perfluoropolyéther ou le fluoropolyéther dont une extrémité de chaîne ou les deux extrémités de la chaîne sont constituées d'un groupe fonctionnel, a une masse moléculaire moyenne comprise entre 500 et 20 000.

**6.** Le procédé selon l'une ou plusieurs des revendications précédentes, caractérisé en ce que le perfluoropolyéther ne portant pas de groupes fonctionnels est choisi dans l'une des classes suivantes:
A)

$$R_f\text{-O-}(C_3F_6O)_a\,(\underset{CF_3}{\underset{|}{CF}}\text{-O})_b(CF_2O)_c\text{-}R'_f$$

où:
$R_f$ et $R'_f$, qui sont identiques ou différents, sont choisis parmi $CF_3$, $C_2F_5$ et $C_3F_7$; les motifs $C_3F_6O$ (oxytrifluorométhyltrifluoréthylène),

$$\underset{F_3}{\underset{|}{CF}}\text{-O}$$

et $CF_2O$ étant répartis statistiquement sur la chaîne;
a est un entier;
b et c sont des entiers ou valent chacun zéro;
quand la somme (b + c) est différente de zéro, le rapport a/(b + c) est compris entre 5 et 40;
la masse moléculaire est comprise entre 4000 et 10 000;
B) $CF_3O\text{-}(C_2F_4O)_d(CF_2O)_e\text{-}CF_3$
où les motifs $C_2F_4O$ et $CF_2O$ sont répartis statistiquement sur la chaîne;
d et e sont des entiers;
le rapport d/e est compris entre 0,3 et 5;
la masse moléculaire moyenne est comprise entre 3000 et 16 000;
C) $CF_3O\text{-}(C_3F_6O)_f(C_2F_4O)_g\text{-}(CFXO)_h\text{-}CF_3$
où les motifs $C_3F_6O$, $C_2F_4O$ et CFXO sont répartis statistiquement sur la chaîne;
f, g et h sont des entiers;
le rapport f/(g + h) est compris entre 1 et 50;
le rapport g/h est compris entre 1 et 10;
X est F ou $CF_3$;
la masse moléculaire moyenne est comprise entre 4000 et 12 000;
D) $R^3_fO\text{-}(CF_2CF_2CF_2O)_jR^4_f$
où $R^3_f$ et $R^4_f$, identiques ou différents, représentent, chacun, $-CF_3$ ou $C_2F_5$, et
j est un entier ayant une valeur telle que la masse moléculaire moyenne soit comprise entre 4000 et 16 000.

**7.** Le procédé selon l'une ou plusieurs des revendications précédentes, caractérisé en ce que le perfluoropolyéther ou le fluoropolyéther ayant une extrémité de chaîne ou les deux extrémités de la chaîne constituées d'un groupe fonctionnel à même de former une liaison chimique et/ou physique avec le matériau à protéger est choisi dans l'une des classes suivantes:

E)

$$R_f\text{-}O\text{-}(C_3F_6O)_a(\underset{\underset{CF_3}{|}}{CF}\text{-}O)_b(CF_2O)_c\text{-}D$$

où:

$R_f$ est un groupe perfluoroalkyle ayant 1 à 3 atomes de carbone; les motifs $C_3F_6O$,

$$\underset{\underset{CF_3}{|}}{CF}\text{-}O$$

et $CF_2O$ étant répartis statistiquement sur la chaîne;

a est un entier;

b et c sont des entiers ou valent chacun zéro;

quand la somme (b + c) est différente de zéro, le rapport a/(b + c) est compris entre 5 et 10;

D est un groupe -CFX-COZ', où X est F ou $CF_3$ et Z' est OH, $OR^5$ ou $NR^6R^7$, $R^5$ étant un groupe alkyle ayant 1 à 8 atomes de carbone, un groupe aromatique, ou un groupe alkylaromatique, le groupe aromatique pouvant être substitué par des groupes alkyles ou des groupes polyéthoxy; $R^6$ et $R^7$, identiques ou différents, peuvent être chacun un groupe alkyle ayant 1 à 8 atomes de carbone ou un groupe phényle substitué par des groupes alkyles ou des groupes polyéthoxy; la masse moléculaire moyenne est comprise entre 500 et 10 000;

F) $D'\text{-}(C_2F_4O)_d(CF_2O)_e\text{-}D'$

où les motifs $C_2F_4O$ et $CF_2O$ sont répartis statistiquement sur la chaîne;

d et e sont des entiers; le rapport d/e est compris entre 0,3 et 5;

D' = $CF_2$-COZ', où Z' a la signification donnée ci-dessus;

la masse moléculaire moyenne est comprise entre 1000 et 20 000;

G)

$$R_f\text{-}O\text{-}(C_3F_6O)_a\text{-}(\underset{\underset{CF_3}{|}}{CF}O)_b(CF_2O)_c\text{-}CFX\text{-}YZ_p$$

où:

$R_f$ est un groupe perfluoralkyle ayant 1 à 3 atomes de carbone; les motifs $C_3F_6O$,

$$\underset{\underset{CF_3}{|}}{CF}\text{-}O$$

et $CF_2O$ étant répartis statistiquement sur la chaîne;

a est un entiers;

b et c sont des entiers ou valent chacun zéro;

quand la somme (b + c) est différente de zéro, le rapport a/(b + c) est compris entre 5 et 40;

p peut valoir 1 ou 2;

Y est un radical organique pontant bivalent ou trivalent;

la masse moléculaire moyenne est comprise entre 500 et 10 000;

Z est un groupe fonctionnel à même de former une liaison chimique et/ou physique avec le matériau à protéger, et est choisi dans le groupe consistant en Z1, Z2, Z3 et Z4, où:

Z1 est un radical organique non aromatique, non fluoré, ne contenant pas d'atomes d'hydrogène actif, contenant deux hétéroatomes ou plus, identiques ou différents et choisis parmi O, M, S, Se et P, qui sont des donneurs de doublets électroniques et sont situés sur les positions 1-3, 1-4 ou 1-5 les uns par rapport aux autres, ou un radical aromatique contenant éventuellement des hétéroatomes choisis parmi ceux indiqués ci-dessus, à même de former des liaisons de coordination ou datives;

Z2 est un radical $-CONR^9R^{10}$ ou $COOR^{11}$, où $R^{11}$ est un groupe alkyle ayant 1 à 8 atomes de carbone, un groupe aromatique ou un groupe alkylaromatique, le groupe aromatique peut être substitué par des groupes alkyles ou par des groupes polyéthoxy;
$R^9$ et $R^{10}$, qui sont identiques ou différents, ont les mêmes significations que $R^{11}$;
ou représente un radical

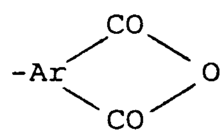

où Ar est un groupe aromatique ayant de préférence 6 ou 10 atomes de carbone;
ou un radical -OH; -NCO;

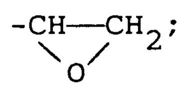

$-NHR^{11}$; $-COR^{11}$; $-SiR^{12}_t(OR^{13})_{3-t}$
où $R^{12}$ et $R^{13}$, qui sont identiques ou différents, ont les mêmes significations que $R^{11}$, t valant 0, 1 ou 2;

Z3 est un radical contenant une insaturation polymérisable du type éthylénique;

Z4 est un radical appartenant à la classe Z1, contenant un ou plusieurs substituants $R^{11}$, $R^{11}$ ayant les significations données ci-dessus.

H) $AO-(C_2F_4O)_k(CF_2O)_l-A'$
où les motifs $C_2F_4O$ et $CF_2O$ sont répartis statistiquement sur la chaîne;
k et l sont des entiers; le rapport k/l est compris entre 0,3 et 5;
$A' = CFX-YZ_p$
A est A' ou un radical perfluoralkyle ayant 1 à 3 atomes de carbone; p, X, Y et Z ont les mêmes significations que celles indiquées ci-dessus;
la masse moléculaire est comprise entre 1000 et 20 000;

J) $AO-(C_3F_6O)_f(C_2F_4O)_g(CFXO)_h-A'$
où les motifs $C_3F_6O$, $C_2F_4O$ et CFXO sont répartis statistiquement sur la chaîne;
f, g et h sont des entiers; le rapport f/(g + h) est compris entre 1 et 50;
le rapport g/h est compris entre 1 et 10;
A, A' et X ont les mêmes significations que celles indiquées ci-dessus;
la masse moléculaire est comprise entre 500 et 20 000;

K)

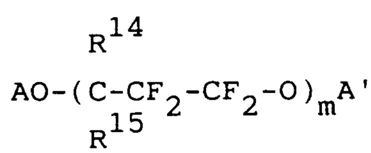

où $R^{14}$ et $R^{15}$, qui sont identiques ou différents, sont chacun choisis parmi H, Cl et F; un atome de fluor dans les fragments $-CF_2-$ pouvant être substitué par H, Cl, un groupe perfluoralcoxy ou un groupe perfluoralkyle;
quand le composé contient des motifs

$$\begin{array}{l} R^{14} \\ -C-CF_2-CF_2-O \\ R^{15} \end{array}$$

qui sont différents les uns des autres, ces motifs sont répartis statistiquement sur la chaîne; m est un entier choisi de façon que la masse moléculaire moyenne soit comprise entre 1500 et 8000.

**8.** Le procédé selon l'une ou plusieurs des revendications précédentes, caractérisé en ce que le radical 23 est choisi parmi les radicaux méthacryle, acryle, cinnamique, vinyle, allyle, vinyléther et allyléther.

**9.** Le procédé selon l'une ou plusieurs des revendications précédentes, caractérisé en ce que le radical pontant organique Y est choisi parmi:
$-CH_2O-$, $-CH_2-O-CH_2-$, $-CH_2(OCH_2CH_2)_n-$ (où n est un entier compris entre 1 et 3), $-CF_2-$, $-CF_2O-$, $-CH_2-$, $-CONR^{11}-$, -COO-, -COS-, -CO-, $-CH_2NR^{11}-$, $-CH_2S-$, où $R^{11}$ est un groupe alkyle ayant 1 à 8 atomes de carbone, un groupe aromatique ou un groupe alkylaromatique, le groupe aromatique pouvant être substitué par des groupes alkyles ou des groupes polyéthoxy.

**10.** Le procédé selon l'une ou plusieurs des revendications précédentes, caractérisé en ce que le mélange d'agents protecteurs contient de 10 à 20% en poids de l'homopolymère ou du copolymère de tétrafluoréthylène.

**11.** Le procédé selon l'une ou plusieurs des revendications précédentes, caractérisé en ce que le perfluoropolyéther ne portant pas de groupes fonctionnels et/ou le perfluoropolyéther ou le fluoropolyéther dont une extrémité de chaîne ou les deux extrémités de la chaîne sont constituées d'un groupe fonctionnel, sont utilisés sous forme de leur solution dans un chlorofluorocarbone ou dans un fluorocarbone.

**12.** Le procédé selon la revendication 11, caractérisé en ce que le chlorofluorocarbone est le 1,1,2-trichloro-1,2,2-trifluoroéthane.

**13.** Le procédé selon l'une ou plusieurs des revendications précédentes, caractérisé en ce que la quantité d'agents protecteurs appliqués sur les matériaux ou ouvrages à protéger est comprise entre 10 et 500 $g/m^2$ d'aire à traiter.

**14.** Un procédé de protection de matériaux pour l'industrie du bâtiment et les parements, contre les peintures, encres et analogues, qui consiste à appliquer sur la surface de ces matériaux, ayant une porosité non supérieure à 40%, un revêtement comprenant un perfluoropolyéther ou un fluoropolyéther dont une extrémité de chaîne ou les deux extrémités de chaîne sont constituées d'un groupe fonctionnel à même de former une liaison chimique et/ou physique avec le matériau à protéger, où ledit perfluoropolyéther contient des motifs oxaperfluoralkylène choisis parmi les classes suivantes:
(I) $(CF_2-CF_2O)$ et $(CF_2O)$, ces motifs étant répartis statistiquement sur la chaîne perfluoropolyéther;
(II)

$$\begin{array}{l} (CF_2-CFO) \\ \qquad\quad | \\ \qquad\quad CF_3 \end{array}$$

et (CFXO), où X est F ou $CF_3$, lesdits motifs étant répartis statistiquement sur la chaîne;
(III) $(CF_2-CF_2)$,

$$\begin{array}{l} (CF_2-CFO) \\ \qquad\quad | \\ \qquad\quad CF_3 \end{array}$$

et (CFXO), où X est F ou $CF_3$, ces motifs étant répartis statistiquement sur la chaîne; ou

(IV)

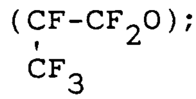

(V) $(CF_2\text{-}CF_2\text{-}CF_2O)$;

(VI)

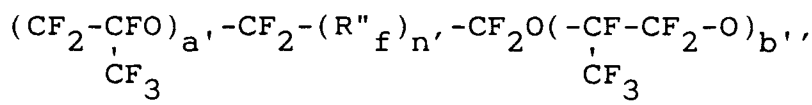

où $R''_f$ est un groupe fluoralkylène; n' vaut 0 ou 1;

a' et b' sont des entiers, et la somme (a' + b') est supérieure ou égale à 2;

(VII) $(CF_2\text{-}CF_2O)$;

(VIII)

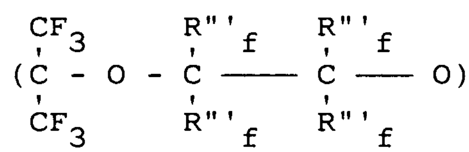

où les groupes $R'''_f$, qui sont identiques ou différents, représentent chacun un fluor ou un groupe perfluoralkyle;

(IX) $(CF_2O\text{-}CF_2\text{-}CF_2O)$;

et/où le perfluoropolyéther contient les motifs suivants:

(X) $(CF_2\text{-}CF_2\text{-}CF_2O)$; ou

(XI) $(CF_2\text{-}CF_2\text{-}CH_2O)_{p'}\text{-}R^{iv}_f\text{-}O\text{-}(CH_2\text{-}CF_2\text{-}CF_2O)_{q'}$

où:

$R^{iv}_f$ est un groupe fluoralkylène, et

p' et q' valent chacun zéro ou sont de entiers, et la somme (p' + q') est supérieure ou égale à 2;

ledit perfluoropolyéther ou fluoropolyéther étant utilisé en mélange avec:

(1) 2 à 30% en poids, par rapport au total des composants du revêtement, d'un polytétrafluoréthylène ou d'un copolymère de tétrafluoréthylène contenant jusqu'à 12% en mole d'autres monomères perfluorés, ledit homopolymère ou copolymère étant utilisé sous forme d'une poudre fine; et éventuellement

(2) un perfluoropolyéther comportant des groupes terminaux perfluoralkyles.

**15.** Le procédé selon la revendication 14, dans lequel le polytétrafluoréthylène ou un copolymère de tétrafluoréthylène est présent en une quantité de 10 à 20% en poids.

**16.** Le procédé selon la revendication 14 ou 15, dans lequel le copolymère de tétrafluoréthylène contient jusqu'à 10% en moles d'hexafluoropropène et jusqu'à 5% en moles de perfluoroalkyleperfluorovinyléther.